# EUROPÄISCHE PATENTSCHRIFT

(11) **EP 2 226 615 B1**
(45) Veröffentlichungstag und Bekanntmachung des Hinweises auf die Patenterteilung: **22.08.2018**
(21) Anmeldenummer: 09154141.7
(22) Anmeldetag: 02.03.2009
(51) Int. Cl.: G01F 23/284, G01F 23/296

(54) **Messen von Füllständen mittels Auswerten einer Echokurve**
Measurement of fill levels by evaluating an echo curve
Mesures de niveaux de remplissage à l'aide d'une évaluation d'une courbe d'écho

(43) Veröffentlichungstag der Anmeldung: 08.09.2010
(73) Patentinhaber: VEGA Grieshaber KG, 77709 Wolfach (DE)
(72) Erfinder: Griessbaum, Karl, 77796 Mühlenbach (DE); Fehrenbach, Josef, 77716 Haslach (DE); Deck, Thomas, 77709 Wolfach (DE); Gaiser, Martin, 72275 Alpirsbach (DE); Rauer, Winfried, 77716 Fischerbach (DE)
(74) Vertreter: Maiwald Patent- und Rechtsanwaltsgesellschaft mbH

(56) Entgegenhaltungen:
- EP-A2- 1 186 906
- WO-A1-2007/093270
- DE-A1- 4 407 369
- DE-A1- 10 217 934

## Beschreibung

Die vorliegende Erfindung betrifft das technische Gebiet der Messtechnik. Insbesondere betrifft die vorliegende Erfindung das Messen von Füllständen, ein Verfahren zur Füllstandsmessung, ein Programmelement, eine Messvorrichtung und das Verwenden der Messvorrichtung zur Kollisionsüberwachung.

Bei der Füllstandsmessung mittels Laufzeitverfahren wird zyklisch ein Echoprofil, eine Echofunktion oder Echokurve erzeugt um daraus in einem Auswertealgorithmus, auch als Nutzechoidentifikation bezeichnet, das "richtige" Echo zu identifizieren, welches von einer Füllgutoberfläche herrührt, und um danach in einem weiteren Algorithmus, der als Echovermessung bezeichnet werden kann, dieses Echo hinsichtlich seiner Laufzeit zu vermessen. Laufzeitsensoren, welche für solch eine Füllstandsmessung eingesetzt werden, mögen die Aufgaben Echoauswertung und Echovermessung vollständig und im gegenseitigen Wechsel abarbeiten, wodurch ein starrer serieller Ablauf entstehen mag. Das Auswerten eines Echos mag das Bestimmen der Reflexion von der Füllgutoberfläche anhand eines Echoprofils der gesamten Messspanne aufweisen und das Vermessen mag das Bestimmen eines Distanzwertes und/oder eines Füllstandswertes des Echoprofils der Füllgutreflexion aufweisen.

Aus der DE 10 2006 006 572 A1 mag bekannt sein, dass durch Abtastung relativ weniger Werte eines ZF-Signals eine Hüllkurve und auch Phasenwinkel des ZF-Signals aus jeweils nur zwei Abtastpunkten zu berechnen sind.

Die DE 199 25 216 C1 mag eine Referenzmessung von Störsignalen und das Subtrahieren eines Anteils eines Frequenzspektrums, welches durch Störfrequenzen hervorgerufen wird, von einem abgetasteten Messsignal zu einem Differenzsignal offenbaren.

Ferner mag in der DE 44 07 369 das Ermitteln eines Korrekturwerts aus einem durch den Phasenwinkel bestimmten Bruchteils einer Trägerfrequenz beschrieben werden.

Die US 5,457,990 mag ein Verfahren zum Erkennen eines Flüssigkeitsstandes in einem Tank mittels eines Analysefensters offenbaren.

Ferner mag die US 5,207,101 das periodische Versorgen eines Transducers mit Energie beschreiben, um Energiepulse auszusenden, die von der Oberfläche eines zu messenden Materials reflektiert werden.

In der EP 1 562 051 A2 mag ein Pulsmessprozess beschrieben sein, welcher während einer ersten Phase ein Echoprofil erzeugt und welcher die erste Phase unterbricht, um zumindest einmal einen Energiespeicher aufzuladen.

Die DE 43 27 333 A1 mag ein Verfahren zur Messung eines Füllstandes einer Flüssigkeit in einem Behälter nach dem Radarprinzip beschreiben, wobei in einem gemessenen Spektrum auftretende und von der Füllstandshöhe der Flüssigkeit unabhängige Störsignale mit Hilfe der gemessenen Intensität eines ersten Störsignals korrigiert werden.

Die EP 1 225 455 A2 mag das Subtrahieren von ungewünschten Radiofrequenzstörungen beschreiben.

Ferner mag die US 6,972,712 B1 das Speichern einer Pulsform in einem ROM während einer Vorinstallationskalibrierung offenbaren.

Die DE 31 074 44 mag ein Verfahren für ein hochauflösendes Pulsradar beschreiben.

WO 2007/093270 A1 beschreibt die paarweise ZF-Abtastung für Puls-Laufzeit-Füllstandsensoren, bei welchem aus zwei digitalen Abtastwerten ein die ZF-Kurve charakterisierender neuer Wert berechnet wird.

EP 1 186 906 A2 beschreibt ein Verfahren und eine Vorrichtung zur Entfernungsmessung mittels eines Signals, das in Richtung des zu messenden Objekts mittels einer Sendeeinrichtung ausgesendet wird, wobei von einer Empfangseinrichtung ein Echosignal, dem ein erster Referenzimpuls überlagert ist, empfangen wird, wobei das Echosignal mit einem zweiten Referenzsignal, das einen zweiten Referenzimpuls aufweist, zur Ermittlung einer Signallaufzeit verglichen wird, und wobei zur Ermittlung eines Amplituden-Offsets zwischen dem Echosignal und dem zweiten Referenzsignal ein erster Vergleichswert des Echosignals und ein zweiter Vergleichswert des zweiten Referenzsignals miteinander verglichen werden, die zeitlich jeweils vor dem ersten und zweiten Referenzimpuls in einem Bereich der Echosignalkurve und der zweiten Referenzsignalkurve liegen, indem diese wenigstens annäherungsweise eine Steigung 0 aufweisen.

DE 102 17 934 A1 beschreibt ein Verfahren und eine Vorrichtung zur Bestimmung einer Flüssigkeitshöhe mithilfe von Ultraschallimpulsen.

Es ist eine Aufgabe der vorliegenden Erfindung, ein effektiveres Verfahren zur Füllstandmessung anzugeben.

Gemäß einem Ausführungsbeispiel der vorliegenden Erfindung mag ein Verfahren zur Füllstandmessung, ein Programmelement, eine Messvorrichtung und eine Verwendung der Messvorrichtung zur Kollisionsüberwachung geschaffen werden.

Gemäß einem weiteren Ausführungsbeispiel der vorliegenden Erfindung mag das Verfahren zur Füllstandmessung das Generieren einer Echokurve aufweisen. Ferner mag in dem Verfahren die generierte Echokurve mit zumindest einem Analyseverfahren analysiert werden, welches Analyseverfahren aus der Gruppe der Analyseverfahren gewählt sein mag, die Gruppe bestehend aus dem Analysieren der Echokurve mittels zumindest zweier paralleler Tasks und dem Analysieren der Echokurve durch Vergleich mit einer Störechokurve auf ZF-Ebene.

In einem Beispiel mag die Störechokurve eine Normechokurve sein. In anderen Worten mag die Störechokurve eine unter dem Ausschluss von dem Füllgut ermittelte und gespeicherte Echokurve innerhalb des Füllgut-Behälters sein. Somit mag die Störechokurve sämtliche Störungen enthalten ausgenommen den störenden Einfluss des Füllguts. Die Normechokurve oder Störechokurve mag allgemein eine gespeicherte Echokurve sein, mit der eine aufgenommene Echokurve verglichen werden kann. Diese gespeicherte Echokurve mag als Referenz benutzt werden.

Eine Task mag dabei eine von einer Vorrichtung oder Einrichtung insbesondere von einer Steuerung durchzuführende Aufgabe innerhalb eines begrenzten Zeitraumes oder Zeitintervalls sein. Die Analyse mag im Zeitbereich oder im Frequenzbereich, das heißt auf und/oder entlang einer Zeitachse oder einer Frequenzachse erfolgen. Ferner mag das Analysieren auf ZF (Zwischenfrequenz)-Ebene das Multiplizieren der Echokurve mit einem Abtastsignal aufweisen.

Gemäß einem weiteren Ausführungsbeispiel der vorliegenden Erfindung mag ein Programmelement beschrieben werden, welches einen Softwarecode aufweisen mag, welcher, wenn er von einem Prozessor ausgeführt wird, das Generieren einer Echokurve und das Analysieren der Echokurve aufweist. Beim Analysieren der Echokurve mag eine Analysemethode oder ein Analyseverfahren ausgewählt aus der Gruppe der Analyseverfahren bestehend aus Analysieren mittels zumindest zweier paralleler Tasks und Analysieren der Echokurve durch Vergleich einer Normechokurve auf ZF-Ebene zum Einsatz kommen.

Gemäß einem weiteren Ausführungsbeispiel der vorliegenden Erfindung mag eine Messvorrichtung bereitgestellt werden, welche eine Echokurvengeneriereinrichtung und eine Analyseeinrichtung aufweist. Die Echokurvengeneriereinrichtung mag zum Generieren einer Echokurve eingerichtet sein und die Analyseeinrichtung mag zum Analysieren der Echokurve mit einer Analysemethode eingerichtet sein. Die Analysemethode mag dabei eine Analysemethode sein, welche aus der Gruppe der Analysemethoden ausgewählt sein mag, welche aus dem Analysieren mittels zumindest zweier paralleler Tasks und dem Analysieren durch Vergleich einer Echokurve mit einer Normechokurve auf ZF-Ebene bestehen mag.

Gemäß noch einem weiteren Ausführungsbeispiel der vorliegenden Erfindung mag das erfindungsgemäße Verfahren und/oder die erfindungsgemäße Messvorrichtung zum Verwenden zur Kollisionsüberwachung vorgesehen sein. Dabei mag die Verwendung das Bereitstellen des Verfahrens und/oder der Messvorrichtung aufweisen und das Durchführen des Verfahrens zur Füllstandsmessung mit dem Ergebnis einer Kollisionsüberwachung.

Das Durchführen von Messaufgaben mag das Generieren und Auswerten eines Echos aufweisen und nachdem das Echo generiert wurde, das Vermessen des Echos. Bei dem Vermessen des Echos mag eine Distanz zu einem Referenzecho ermittelt werden. Diese ermittelte Distanz mag sich in einen Füllstand umrechnen lassen. Zum Ermitteln des Füllstandes mag ein serieller Ablauf oder ein sequentieller Ablauf eingesetzt werden. Bei der sequentiellen Abarbeitung mag eine Task warten bis die andere vollständig erledigt ist. Das mag bedeuten, dass im Wesentlichen erst nach dem Auswerten des Echos das Vermessen des Echos durchgeführt werden kann oder dass die Task des Vermessens des Echos auf das Auswerten des Echos warten mag.

Um einen im Wesentlichen aktuellen Füllstand, d.h. in Echtzeit, in einem Behälter bei einer Füllstandsmessung ermitteln zu können, mag sich dieser starre Ablauf periodisch wiederholen. Es mag also innerhalb der Periodendauer einer einzelnen Messung jeweils eine Auswertung und eine Vermessung stattfinden. Somit mag die Periodendauer oder die Messrate durch die Dauer für die Auswertung und die Dauer für die Vermessung bestimmt sein, weshalb sich bei geringer zur Verfügung stehender Leistung bei entsprechenden Sensoren, die nach diesem seriellen Ablauf arbeiten, entweder die Messrate reduzieren mag oder die Qualität der Echoauswertung oder Echoprofilauswertung gering sein mag.

Die Echoauswertung oder Echoprofilauswertung mag das Bestimmen der Reflexionen von einer Füllgutoberfläche anhand eines Echoprofils innerhalb der gesamten Messspanne aufweisen. Eine Messspanne mag der interessierende Entfernungsbereich gemessen von einer Antenne sein. Die Größe der Messspanne mag durch den Bereich bestimmt werden innerhalb welchen Bereichs der Füllstand und somit die Echos vermutet werden und weshalb dieser Bereich untersucht werden soll. Beispielsweise mag die Messspanne einen Bereich von 0m bis 40m aufweisen. Das Vermessen des Echos mag in einem Beispiel das Bestimmen eines Distanzwertes anhand des Echoprofils der Füllgutreflexion aufweisen. Der Distanzwert kann in einen Füllstandwert umgerechnet werden.

Durch das Aufteilen des Auswertens und des Vermessens beispielsweise in zwei oder mehrere Tasks mag der starre und serielle Ablauf aufgebrochen werden. Das Auswerten und das Vermessen mögen somit zwei Tasks bilden, welche in ihrer zeitlichen Abarbeitung weitgehend oder völlig unabhängig voneinander sein können.

Das Auswerten mag das Bestimmen einer Echoposition aufweisen. Das Vermessen mag das Bestimmen eines Abstands der Echoposition zu einem Referenzpuls oder Referenzecho aufweisen.

In diesem Zusammenhang mag unabhängig bedeuten, dass zwar Ergebnisse der einzelnen Tasks oder Prozesse von der jeweils anderen Task berücksichtigt werden, dass die Ausführungsdauer der jeweiligen Task aber im Wesentlichen unabhängig von der anderen Task durchgeführt werden kann. Oder in anderen Worten, dass, so lange eine Task Informationen zur Verfügung haben mag, welche es der Task erlauben, die Task oder Aufgabe durchzuführen, diese Task oder Aufgabe die Task auch durchführen mag. Eine Task mag also nicht das Abarbeiten der kompletten anderen Task abwarten müssen um tätig zu werden.

Zwar können die beiden Tasks beispielsweise vom selben Prozessor oder Microcontroller bearbeitet werden, aber in ihrer zeitlichen Abarbeitung weitgehend unabhängig voneinander sein. Dabei mag der jeweiligen Task eine sogenannte Zeitscheibe von dem Prozessor oder der Ausführeinrichtung zur Verfügung gestellt werden, sogenanntes Multitasking. Ein entsprechender Steueralgorithmus oder Scheduling-Algorithmus mag für die Verteilung der Rechenzeit der Ausführeinrichtung sorgen. Die Zuteilungsdauer zu dem Prozessor mag keine Abhängigkeit der Tasks voneinander beschreiben, da diese Zuteilung unabhängig von einem Ergebnis oder dem Beenden einer Task erfolgen mag. Das heißt, die jeweils einer Task zustehende Rechenzeit mag der Task auch entsprechend zugeordnet werden. Bei der Zuordnung der Rechenzeit zu der Task mag eine Priorisierung eingesetzt werden, wobei sich die Priorisierung anhand der jeweils nötigen Messrate oder Ausführrate der jeweiligen Task orientieren mag.

Das Auswerten oder die Auswertung der Echokurve mag eine langsame, aber sichere Untersuchung des gesamten Messbereichs aufweisen. Bei dieser Untersuchung mag als Ergebnis die Auswahl des sogenannten "richtigen" Echos herauskommen. Das "richtige" Echo mag das gesuchte Echo oder Nutzecho sein, dessen zeitliche Lage in einem Reflexionsdiagramm der örtlichen Lage einer Füllgutoberfläche im Wesentlichen entsprechen mag. Zur Durchführung der Auswahl oder Auswertung des richtigen Echos mag ein hoher Energiebedarf bestehen, da der gesamte Echobereich auszuwerten sein mag. Der gesamte Echobereich mag eine Vielzahl einzelner Reflexionen oder Echos aufweisen. Die Vermessung des aufgefundenen richtigen Echos mag schnell und energiesparend durchführbar sein.

Somit mag eine Task, welche mit der Auswertung beschäftigt sein mag, einen hohen Bedarf an Rechenzeit und damit einen hohen Energieverbrauch aufweisen, aber auf eine hohe Wiederholgeschwindigkeit verzichten können. Die Auswertung mag eine ungefähre oder grobe Lage eines Echos ergeben. Die Lage mag zwar noch nicht genau bestimmt sein, aber die Wahrscheinlichkeit dafür, dass es sich um das gesuchte Nutzecho handelt, sollte entsprechend hoch sein. Von der Auswertetask kann somit eine ungefähre Lage eines Echos oder ungefähre Koordinaten des Echos an die Vermessungstask übergeben werden. Die Vermessungstask mag dann mit Echovermessungsalgorithmen das übergebene Echo untersuchen und aus den ungefähren Koordinaten eine genauere Lage des Echos bestimmen.

Dieses Verfahren mag sowohl für das Ermitteln der Lage des Referenzechos als auch für das Ermitteln der Lage des Nutzechos einsetzbar sein. Dabei kann die Lage des Nutzechos und / oder die Lage des Referenzechos mittels weiterer parallelisierter Tasks bestimmt werden.

Da sich die Lage des Echos im Wesentlichen langsam ändern mag, mag die Geschwindigkeitsanforderung einer Auswertetask gering sein. Die genaue oder im Wesentlichen genaue Lage des Echos mag sich jedoch beispielsweise durch Vibrationen auf der Füllgutoberfläche schnell ändern, weshalb auch hohe Anforderungen an eine Messrate des Vermessungsalgorithmus gestellt werden mögen. Das Auswerten und das Vermessen mag einen unterschiedlichen Energiebedarf aufweisen, da die lange Rechenzeit des Auswertens einen hohen Energiebedarf bedeuten mag, die kurze Rechenzeit des Vermessens jedoch einen niedrigen Energiebedarf bedeuten mag.

In einem Beispiel mag in der Zeit, während der eine gesamte Echokurve ausgewertet werden mag eine Vielzahl von aktuellen Werten von der Vermessungs-Task bereitgestellt werden. Diese rasche Bereitstellung von Vermessungswerten mag es auch erlauben kurzfristige zeitliche Schwankungen eines Echos zu erfassen.

D.h. bei einer parallelen Verarbeitung kann quasi gleichzeitig die Erzeugung eines gesamten Echoprofils als auch die Erzeugung von Echoprofilen innerhalb eines Ausschnitts des Echoprofils oder eines Fensters vorgesehen sein. In anderen Worten mögen die ungefähren Koordinaten der Lage eines Echos mittels eines Fensters beschrieben werden, wobei das Nutzecho mit einer hohen Wahrscheinlichkeit innerhalb dieses Fensters liegen mag. Das Fenster mag einen Bereich oder Ausschnitt angeben in dem die Echokurve näher untersucht werden soll. Insbesondere mögen die Koordinaten die Lage des Echos oder eines Echobereiches angeben. Durch eine weitere Echoprofilauswertung, die jedoch auf den Bereich im Inneren des Fensters begrenzt sein mag, kann das Echoprofil nach Nutzechos und/oder nach Referenzechos untersucht werden, das heißt die Echokurve kann in einem begrenzten Zeit- und/oder Ortbereich untersucht werden.

Die Aufteilung in zumindest zwei Tasks mag es ermöglichen, dass die Periodizität variabel eingestellt werden kann, mit der Tasks abgearbeitet werden. Es mögen somit Triggerzeitpunkte oder Auslösezeitpunkte für die einzelnen Tasks individuell und variabel einstellbar sein. Somit mag es möglich sein, dass während einer vorgegebenen Vielzahl von Auswertungen eine vorgebbare Vielzahl von Vermessungen stattfinden kann. In einem Beispiel mag die Vielzahl von Auswertungen geringer als die Vielzahl von Vermessungen sein. Die Organisation der zumindest zwei Tasks mag dabei seriell sein. In dem Beispiel der seriellen Organisation mag eine einmalige Auswertung durchgeführt werden und danach oder während der Auswertung mag x Mal, also beliebig oft, eine abgeschlossene Vermessung durchgeführt werden, wonach dann dieser Vorgang periodisch wiederholt werden mag. Die Anzahl x der Vermessungen mag vorgebbar sein.

In einem anderen Beispiel mag eine quasi parallele Abarbeitung der Tasks erfolgen, das mag bedeuten dass die beiden Tasks derart ineinander verschachtelt sein mögen, dass die Auswertetask immer wieder durch die Vermessungstask unterbrochen werden mag. Beispielsweise mag in dem Zeitintervall, bis zu dem das Ergebnis einer Auswertung vorliegen mag, wiederholt ein Ergebnis für eine Vermessung eines Echos durchgeführt werden. Eine verschachtelte Durchführung der beiden Tasks mag einen Multitasking-Betrieb ermöglichen, das heißt, der gleiche Prozessor mag periodisch die einzelnen Tasks durchführen. Unabhängige Tasks mag bedeuten, dass die Tasks einen eigenen Kontext wie beispielsweise einen eigenen Status oder einen eigenen Befehlszähler aufweisen. Dadurch kann der gleiche Prozessor die einzelnen Tasks wie parallel ablaufende Tasks behandeln.

In einem anderen Ausführungsbeispiel der vorliegenden Erfindung mag jede Task einen eigenen Prozessor zugewiesen bekommen, wodurch ein hoher Grad an Unabhängigkeit erreicht werden mag. Die einzelnen Tasks mögen im Wesentlichen nur noch voneinander abhängen, indem sie die Ergebnisse der einzelnen Tasks berücksichtigen mögen.

Es lässt sich somit auch ein zyklischer Ablauf zur Erzeugung eines Echoprofils erreichen, wobei die Starre einer seriellen Abarbeitung aufgehoben sein mag. Das mag bedeuten, dass zyklisch ein Echoprofil erzeugt werden mag, woraus in einem Auswertealgorithmus das "richtige" Echo von der Füllgutoberfläche identifiziert werden mag und danach dieses Echo hinsichtlich seiner Laufzeit vermessen werden mag.

Für den Vermessungsalgorithmus oder die Vermessungstask mag im Wesentlichen nur ein Teil des Echoprofils generiert werden, während für den Auswertealgorithmus das gesamte Echoprofil erzeugt wird. Der Auswertealgorithmus mag alle Echos berücksichtigen, welche innerhalb der vorgebbaren Messspanne liegen. Der Auswertealgorithmus mag folglich alle Echos berücksichtigen, die zwischen einer Minimalentfernung und einer Maximalentfernung von der Antenne liegen. Der Auswertealgorithmus mag alle Echos berücksichtigen, da sich das Füllstandecho an einer beliebigen Stelle innerhalb des Bereichs der Messspanne befinden kann.

Für den Echovermessungstask mag nur der durch die Nutzechoidentifikation, d.h. durch den Auswertealgorithmus, vorbestimmte Bereich um das Nutzecho und der Bereich des Referenzechos interessant sein, da der gegenseitige Abstand der Bereiche zur Entfernung des Nutzechos und damit zu einem Messwert für den Füllstand führen mag.

Durch das Bereitstellen unterschiedlicher Tasks mag sich die Messrate erhöhen lassen. Die Messrate mag die Geschwindigkeit sein, mit der ein Messwert am Ausgang eines Sensors erneuert werden kann. Die Messrate kann die zeitliche Auflösung eines Messgeräts bestimmen.

In einem Beispiel, bei dem ein kleiner Prozessbehälter eingesetzt werden mag, mag es zu schnellen Änderungen des Füllstands oder zu stark schwankenden Füllständen kommen. Somit mag es nötig sein, die Messrate zu erhöhen. Ferner mögen Sensoren, welche beispielsweise nach dem Laufzeitprinzip arbeiten, in der Objektüberwachung eingesetzt werden, zum Beispiel bei einer Kollisionserkennung. Somit können auch hohe Anforderungen an eine hohe Messrate erfüllt werden. Ferner mag sich Energie einsparen lassen, da der energieverbrauchende Auswerteprozess oder die Auswertetask weniger häufig durchgeführt werden mag. Es mag sich somit das Verhältnis zwischen Messrate und Leistungsbedarf optimieren lassen, wobei gleichzeitig die Zuverlässigkeit für die Auswahl des richtigen Echos erhöht werden mag.

Wenn von dem Auswerteprozess ein Messfenster oder ein Messbereich bereitgestellt wird, so mag sich der Vermessungsprozess im Wesentlichen nur noch auf diesen Ausschnitt eines Echoprofils konzentrieren. Dadurch mögen die vorhandene Leistung eines Messsensors oder die vorhandenen Ressourcen effektiver für die Bestimmung eines Füllstandes eingesetzt werden können. Die Auswertung und Echovermessung mag das Generieren einer Echokurve oder eines Echoprofils aufweisen. Zum Generieren eines Echoprofils mag vom Sensor ein Sendesignal in Richtung einer Füllgutoberfläche geschickt werden, aus dessen Laufzeit zum Füllgut und zurück zum Sensor die Entfernung zwischen Füllgut und Sensor und damit der Behälterfüllstand bestimmbar ist. Das Sendesignal mag ein HF-Puls (Hoch Frequenz- Puls) sein. Zum Erzeugen eines Sendesignals oder eines Sendepulses mag eine hohe Leistung notwendig sein und somit mag eine Reduzierung der Anzahl oder Länge dieser leistungsintensiven Erzeugung von Echokurven eine Reduktion des Leistungsverbrauchs oder Energieverbrauchs des Messsensors bringen.

Eine Echokurve oder ein Echoprofil mag allgemein ein Signal sein, das einen Amplitudenverlauf von Echos oder Reflexionen über der Entfernung repräsentiert.

Bei einer analogen Echokurve mag der Entfernungsachse die Zeitachse entsprechen, so dass der Amplitudenverlauf über der Zeit die Echos der Messstrecke wiedergibt. Der Amplitudenverlauf kann dabei direkt oder mittelbar über die Modulation eines Trägersignals sichtbar sein. Der Amplitudenverlauf, der direkt als Einhüllende einer Modulation eines Trägersignals sichtbar gemacht wird, mag als Hüllkurve bezeichnet werden. Der Amplitudenverlauf, der mittelbar über die Modulation eines Trägersignals sichtbar gemacht wird, mag als Trägerfrequenz-Kurve oder Zwischenfrequenz (ZF)-Kurve bezeichnet werden. Ist die Einhüllende direkt als Signal vorhanden, dann ist dieses Signal die Hüllkurve. Im Fall der ZF-Kurve ist der Amplitudenverlauf der Einhüllenden nicht als gesondertes Signal vorhanden, sondern nur am Verlauf der Amplitude des Trägersignals ablesbar.

Eine digitale Echokurve mag das zeit- und amplitudendiskrete Pendant zur analogen Echokurve sein. Demnach mag die digitale Echokurve eine Gruppe von Digitalwerten sein, deren Folge den Amplitudenverlauf von Reflexionen über einen bestimmten Entfernungsbereich kennzeichnen mag. Beispielsweise kann die digitale Echokurve die digitalen Amplitudenwerte einer Hüllkurve und /oder einer ZF-Kurve enthalten.

Die Analyse einer Echokurve, eines Echoprofils oder eines Echos mag Störungen vermeiden. Bei dem Vermessen von Echos mag aus einem Pulszug beispielsweise durch periodisches Abtasten oder Mischen mit einem Abtastsignal eine zeitgedehnte ZF-Kurve bzw. Hüllkurve erzeugt werden. Die Lage der Hüllkurve des Nutzechos in Bezug auf die Lage der Hüllkurve eines Referenzechos mag eine Laufzeit bestimmen, welche für den Füllstand maßgeblich sein mag. Durch Störeinflüsse innerhalb eines Behälters mag jedoch die Lage eines Nutzechos nicht genau bestimmbar sein.

Auch mag es sich bei der Hüllkurve um Betragswerte handeln. Der Hüllkurve mag beispielsweise eine höher frequente Kurve oder ZF-Kurve zugrunde liegen.

Beispielsweise kann von einer Hüllkurve einer Echofunktion eine Hüllkurve einer Störfunktion subtrahiert werden, um die Störungen auszublenden. Da jedoch sowohl die Hüllkurve der Echofunktion als auch der Störkurve durch die Betrag-Bildung einer ZF-Kurve mit einer höheren Frequenz entstanden sein mag, kann es trotz der gewünschten Subtraktion zu einer Addition der Beträge kommen.

Physikalisch mag die Hüllkurve eine Rechengröße sein, welche die Form eines mit einer höheren Frequenz ablaufenden Impulszuges nachzeichnet oder einhüllt. Der Impulszug mag eine Vielzahl von Sinusschwingungen aufweisen, welche sich bei Überlagerung mit anderen Impulszügen addieren oder auslöschen können. Bei einem Vergleich von zwei sich unabhängig ausbreitenden Impulszügen lediglich auf Hüllkurvenebene mag es zu einem Pulsieren der gemeinsamen Amplitude der sich überlagernden Impulszüge durch abwechselndes Addieren und Auslöschen kommen. Die Ursache für das Pulsieren mag eine relative Ortsverschiebung bzw. Zeitverschiebung der Reflektoren gegeneinander sein. Die Reflektoren mögen die Reflexionen verursachen. Das Pulsieren mag aber das genaue Bestimmen der Lage eines Echos erschweren. Als Reflektor mag ein Bauteil oder eine Fläche bezeichnet werden, welches oder welche eine elektromagnetische Welle, eine andere Welle - wie zum Beispiel eine Schallwelle - oder Elementarteilchen reflektiert bzw. zurücklenkt.

Um beispielsweise fest in einem Füllbehälter vorhandene Störungen wie Vorsprünge oder Flansche berücksichtigen zu können, mag von dem jeweiligen Behälter ein Normprofil oder Störprofil erstellt werden. Das Störprofil mag in einem ungefüllten Zustand des Behälters erstellt werden und mag Echos sichtbar machen, welche durch Störstellen wie Vorsprünge, Einleitungen oder Leitern innerhalb des Behälters entstehen.

In einem Beispiel mag dieses auch während der Messung im Wesentlichen vorhandene Störechoprofil von einem ermittelten Echoprofil abziehbar sein, wodurch sich lediglich das Nutzecho herausbilden sollte. Durch die Überlagerungseffekte der der Hüllkurve zugrunde liegenden höher frequenten Impulse oder Impulszüge mag es jedoch zu dem bereits erwähnten ungewünschten Pulsieren kommen.

Ein Subtrahieren oder ein Vergleichen des Störechoprofils und eines aktuell ermittelten Echoprofils auf ZF-Ebene mag es ebenfalls ermöglichen ein Bild eines Echos zu liefern, welches um ein Störecho bereinigt sein mag. Als ZF-Ebene mag die Verwendung der trägerfrequenten amplitudenmodulierten ZF-Kurven bezeichnet werden.

Da sich zwei zwar ortsverschiedene aber dennoch überlappende Reflexionen von trägerfrequenten Pulsen oder trägerfrequenten Bursts abhängig vom gegenseitigen Phasenwinkel der beiden zu den Reflexionen gehörigen Trägerschwingungen zu einer Gesamtreflexion addieren mögen, kann die eine Reflexion die andere stören. Eine Subtraktion der einen störenden Reflexion kann im Wesentlichen nur dann zu einem unverfälschten Bild der anderen Reflexion führen, wenn der Subtraktion auch die trägerfrequenten Pulse und nicht nur deren Einhüllende zu Grunde gelegt werden. Das mag bedeuten, dass das Speichern lediglich der Hüllkurve der Störreflexion und deren anschließende Subtraktion zu einem im Wesentlichen verfälschten Bild der interessierenden zweiten Reflexion führen mag.

Wenn aber der trägerfrequente Verlauf der Störreflexion gespeichert wurde, d.h. wenn die Störreflexion auf ZF-Ebene gespeichert wurde, und danach vom trägerfrequenten Verlauf der Gesamtreflexion abgezogen werden mag, dann mag genau die interessierende zweite Reflexion im Wesentlichen unverfälscht übrig bleiben.

Diese im Wesentlichen unverfälschte Ermittlung der Reflexion mag sich durch Abtasten und Digitalisieren sowohl der ZF-Störkurve als auch durch Abtasten der ZF-Echokurve erreichen lassen. Wenn die Kurven in abgetasteter Form vorliegen dann mögen im Wesentlichen nur noch die Werte der Störkurve von den Werten der Echokurve für die jeweils gleichen Entfernungen subtrahiert werden. Von dem Ergebnis, d.h. von der abgetasteten und subtrahierten ZF-Kurve, mag sich dann beispielsweise eine Hüllkurve bilden lassen, die den im Wesentlichen unverfälschten Reflexionsverlauf wiedergibt, bereinigt um die Störreflexionen.

Um den Vergleich zu ermöglichen mag auch das Störprofil als ZF-Störprofil aufgenommen werden. Das Abtasten des höher frequenten ZF-Profils könnte jedoch eine höhere Anzahl Abtastwerte ergeben als das Speichern der Hüllkurve. Diese höhere Anzahl würde sich nach dem Nyquist Kriterium bei Abtasten einer höher frequenten ZF Frequenz ergeben. Insbesondere im Fall einer digitalen Verarbeitung könnte somit eine hohe Anzahl zu verarbeitende Daten entstehen. Das Verfahren der paarweisen Abtastung oder der paarweise versetzten Abtastung könnte eine Reduktion der Abtastwerte ermöglichen.

Aus den Abtastwerten der ZF mag sich eine Hüllkurve berechnen lassen, wie es beispielsweise in der DE 10 2006 006 572 A1 beschrieben sein mag.

Die Subtraktion auf ZF-Level mag in einem Zeitbereich der Echofunktionen stattfinden. Beispielsweise mag die ZF Schwingung eine konstante Frequenz aufweisen. Der Zeitbereich mag sich von einem Frequenzbereich unterscheiden, wobei der Zeitbereich und Frequenzbereich durch eine Transformation ineinander überführt werden können. Die Subtraktion der ZF in einem Zeitbereich mag die Darstellung der ZF-Echofunktion über eine Zeitkoordinate berücksichtigen. Eine Ermittlung eines Spektrums mag durch die Berechnung im Zeitbereich vermieden werden.

In einem Beispiel mag ein Puls-Laufzeitfüllstandsensor eingesetzt werden, bei dem die Signale in Richtung Füllgutoberfläche in Form von Pulsen oder Bursts geschickt werden, das heißt in kurzzeitigen Signalzügen.

Somit mag eine fest eingestellte Frequenz zum Einsatz kommen, welche in einem Frequenzbereich eine im Wesentlichen fest zugeordnete Lage haben mag.

Zum Definieren eines virtuellen Nullpunktes mag jeder Sendepuls aufgeteilt werden in einen auf die Messstrecke geleiteten und einen intern zum Empfänger geleiteten Anteil. Der intern zum Empfänger geleitete Anteil kann als zeitliche Referenzmarke für die von der Messstrecke empfangenen Reflexionen verwendet werden. Dieses sogenannte Referenzecho markiert im Zeitdiagramm der Echofunktion den virtuellen Nullpunkt. Auf diesen virtuellen Nullpunkt können die Laufzeiten der reflektierten Signale bezogen werden. Der Referenzpuls kann als eine Bezugsgröße für das Vermessen von Echos dienen.

Aufgrund der Leistungsreduzierung des vorgeschlagenen Messverfahrens mag das Messverfahren für Zweileitersensoren einsetzbar sein, welche über die Messleitung mit Hilfe einer Power Control Loop mit Energie versorgt werden mögen.

Gemäß einem weiteren Ausführungsbeispiel der vorliegenden Erfindung mag ein computerlesbares Speichermedium bereitgestellt werden, welches ein Programmelement aufweisen mag, wobei, wenn das Programmelement von einem Prozessor ausgeführt werden mag, eine Echokurve generiert werden mag. Ferner mag die Echokurve mit zumindest einer Analysemethode analysiert werden, die aus der Gruppe der Analysemethoden ausgewählt werden mag, wobei die Gruppe aus dem Analysieren mittels zumindest zweier paralleler Tasks und dem Analysieren der Echokurve durch Vergleichen mit einer Normechokurve auf ZF-Ebene bestehen mag.

In einem Beispiel mögen parallele Tasks parallel abgearbeitet werden.

Ein computerlesbares Speichermedium mag eine Floppydisk oder Festplatte, ein USB-Speichermedium (Universal Serial Bus), ein RAM (Random Access Memory), ein ROM (Read Only Memory) oder ein EPROM (Erasable Programmable Read Only Memory) sein. Ein computerlesbares Speichermedium kann aber auch ein Datennetz sein, beispielsweise das Internet, welches es zulässt, einen Programmcode herunterzuladen.

Gemäß einem weiteren Ausführungsbeispiel der vorliegenden Erfindung mag ein Abschnitt oder Ausschnitt der Echokurve analysiert werden.

Insbesondere beim Aufteilen in zwei Tasks mag sich durch das abschnittsweise Analysieren der Aufwand für das Vermessen der Echokurve reduzieren lassen. Der Abschnitt mag als Fenster bezeichnet werden.

Gemäß einem weiteren Ausführungsbeispiel der vorliegenden Erfindung mag zum Ermitteln der Echokurve zumindest ein Verfahren eingesetzt werden ausgewählt aus der Gruppe von Verfahren bestehend aus einem Laufzeitverfahren, einem Puls-Laufzeitverfahren, einem Frequenz basierten Verfahren, einem FMCW-Verfahren (Frequency Modulated Continuous Wave) und einem Frequenz moduliertem Verfahren.

Bei einem FMCW-Verfahren mag eine Vielzahl unterschiedlicher Frequenzen zum Einsatz kommen.

Gemäß einem anderen Ausführungsbeispiel der vorliegenden Erfindung mag das Verfahren zur Füllstandmessung das Speichern der Echokurve und/oder der Störechokurve durch paarweises Abtasten der Echokurve auf ZF-Ebene und/oder durch paarweises versetztes Abtasten der Echokurve auf ZF-Ebene aufweisen.

Gemäß einem weiteren Ausführungsbeispiel der vorliegenden Erfindung mögen die zumindest zwei parallelen Tasks zu jeweils einem Triggerzeitpunkt gestartet werden. Der Triggerzeitpunkt der zumindest zwei Tasks mag ein Tastverhältnis von ungleich 50% aufweisen. Somit mag eine Task einen Prozessor für eine längere Zeitdauer als die andere Task in Anspruch nehmen können.

In anderen Worten mögen die Triggerzeitpunkte Zeitdauern oder bestimmten Tasks zugeordnete Zeitscheiben starten. Während den gestarteten Zeitdauern mag die jeweilige Task ausgeführt werden und die Zeitdauern der Tasks mögen ein Tastverhältnis zueinander aufweisen. Das mag bedeuten, dass die Belegungsdauern des Prozessors mit den Tasks ein Tastverhältnis zueinander aufweisen.

So mag beispielsweise das Tastverhältnis eine Zuteilung zu einer Zeitscheibe oder eine Zuteilungszeitdauer für einen Prozessor darstellen. Beispielsweise mag ein Auswerteverfahren oder eine Auswertetask eine kürzere Zuteilungsdauer zu einem Prozessor haben als eine Vermessungstask. Daher mag eine komplette Vermessungstask während der gesamten Zuteilungszeit zu einem Prozessor erfüllt werden können, während eine Auswertetask in mehreren unterbrochenen Zuteilungszeitscheiben durchgeführt werden mag. Der Auswerteprozess oder die Auswertetask kann von der Vermessungstask unterbrochen werden. Mittels des Unterbrechens mag sich eine höhere Messrate für die Vermessungstask einstellen lassen als für die Auswertetask.

Durch das Aufteilen in parallel ausführbare Prozesse oder Tasks mag sich jedoch berücksichtigen lassen, dass sich die Makro-Lage eines Echos langsamer ändern mag als die Mikro-Lage. Das mag bedeuten, dass die ungefähre Lage des Echos über einen kurzen Zeitraum betrachtet im Wesentlichen konstant sein mag, während sich die exakte Mikro-Lage in kurzen Zeitintervallen ändern mag, beispielsweise aufgrund einer unruhigen Füllgutoberfläche, aufgrund des Befüllens des Füllgutbehälters oder aufgrund des Entleerens des Füllgutbehälters.

Gemäß einem anderen Ausführungsbeispiel der vorliegenden Erfindung mögen die Triggerzeitpunkte eine Zuteilung von den zumindest zwei parallelen Tasks zu einer gemeinsamen Ausführeinrichtung bestimmen. Ein Beispiel für eine Ausführeinrichtung oder für eine Steuereinrichtung mag ein Prozessor, ein Mikroprozessor oder ein Mikrocontroller sein.

Gemäß noch einem anderen Ausführungsbeispiel der vorliegenden Erfindung mag das Verfahren zur Füllstandsmessung eine erste Task aufweisen, welche zum Auswählen eines Abschnitts oder eines Fensters einer Echokurve eingerichtet sein mag.

Eine zweite Task der zumindest zwei parallelen Tasks mag zum Analysieren des ausgewählten Abschnitts der Echokurve eingerichtet sein oder zum Vermessen des entsprechenden Abschnitts.

Gemäß noch einem anderen Ausführungsbeispiel der vorliegenden Erfindung mag zum Auswählen eines Abschnitts der Echokurve ein Fensterbereich gebildet werden und die Echokurve mag im Wesentlichen innerhalb des Fensterbereiches ausgewertet werden. Das mag bedeuten, dass zum Bestimmen der im Wesentlichen genauen Position des Echos lediglich der Teil einer Echokurve ausgewertet werden mag, welcher innerhalb des Zeitintervalls des ermittelten Fensterbereichs liegt.

Gemäß noch einem anderen Ausführungsbeispiel der vorliegenden Erfindung mag das Analysieren oder Vermessen des ausgewählten Abschnitts der Echokurve das Anwenden eines Echoanalyseverfahrens aufweisen. Das Echoanalyseverfahren mag zumindest ein Verfahren sein ausgewählt aus der Gruppe von Echoanalyseverfahren, wobei die Gruppe der Echoanalyseverfahren aus dem Vermessen von Flanken, dem Interpolieren, dem Bestimmen eines Amplitudenanstiegs am Beginn des Echos, dem Bestimmen einer Maximalamplitude des Echos, dem Bereitstellen von Mustersignalen und dem Korrelieren bestehen mag.

Gemäß einem weiteren Ausführungsbeispiel der vorliegenden Erfindung mögen die zumindest zwei parallelen Tasks im Wesentlichen unterschiedliche Wiederholraten aufweisen. Die Wiederholraten mögen sich durch Einstellen des Tastverhältnisses, des Zuteilungsalgorithmus oder der Zuteilungsdauer zu dem Prozessor festlegen lassen.

Gemäß einem weiteren Ausführungsbeispiel der vorliegenden Erfindung mag das Vergleichen auf ZF-Ebene das Subtrahieren einer ZF-Störkurve von einer ZF-Echokurve aufweisen. Selbstverständlich kann auch eine ZF-Echokurve von einer ZF-Normkurve subtrahiert werden. Unter einer ZF-Störkurve oder ZF-Störechokurve kann eine Normechokurve verstanden werden, bei der auf das Bilden einer Hüllkurve verzichtet worden sein mag.

Gemäß noch einem weiteren Ausführungsbeispiel der vorliegenden Erfindung mag das Vergleichen auf ZF-Ebene der ZF-Kurve ein paarweises Abtasten und/oder ein paarweise versetztes Abtasten aufweisen.

Mittels paarweisem Abtasten eines ZF-Signals mag sich eine Hüllkurve mit wenigen Stützstellen ermitteln lassen, wodurch nicht nur die ZF-Echokurve mit beispielsweise einer ZF-Normechokurve verglichen werden kann, sondern auch die zugehörigen Hüllkurven miteinander verglichen werden können.

Gemäß einem weiteren Ausführungsbeispiel der vorliegenden Erfindung mag die Messvorrichtung aus der Gruppe von Messvorrichtungen ausgewählt sein, wobei die Gruppe von Messvorrichtungen aus einem Füllstandsmessgerät, einem Grenzstandsmessgerät, einem Messgerät basierend auf dem Laufzeitprinzip, einem Mikrowellen-Laufzeit-Messgerät, einem TDR (Time Domain Reflectometry) Messgerät, einem Messgerät basierend auf dem Prinzip der geführten Mikrowelle, einem Radarmessgerät, einem Ultraschall-Laufzeit-Messgerät, einem Entfernungsmessgerät, einem Kollisionsmessgerät und einem Echomessgerät bestehen mag.

Es soll angemerkt werden, dass unterschiedliche Aspekte der Erfindung mit Bezug auf unterschiedliche Gegenstände beschrieben wurden. Insbesondere wurden einige Aspekte mit Bezug auf Vorrichtungsansprüche beschrieben, wohingegen andere Aspekte in Bezug auf Verfahrensansprüche beschrieben wurden. Ein Fachmann kann jedoch der vorangehenden Beschreibung und der folgenden Beschreibung entnehmen, dass, außer es wird anders beschrieben, zusätzlich zu jeder Kombination von Merkmalen, die zu einer Kategorie von Gegenständen gehört, auch jede Kombination zwischen Merkmalen gehört, die sich auf unterschiedliche Kategorien von Gegenständen beziehen. Insbesondere sollen Kombinationen zwischen Merkmalen von Vorrichtungsansprüchen und Merkmalen von Verfahrensansprüchen offenbart sein.

Im Folgenden werden weitere exemplarische Ausführungsbeispiele der vorliegenden Erfindung mit Verweis auf die Figuren beschrieben.
Fig. 1 zeigt ein Blockschaltbild eines Radar-Füllstandsensor, der nach dem Puls-Laufzeit-Verfahren arbeitet zum besseren Verständnis der vorliegenden Erfindung.
Fig. 2 zeigt ein Blockschaltbild eines Radar-Füllstandsensors ohne direkter Hüllkurvenbildung in der analogen Signalverarbeitung gemäß einem exemplarischen Ausführungsbeispiel der vorliegenden Erfindung.
Fig. 3 zeigt den Verlauf eines idealisierten ZF-Signals und dessen Hüllkurve gemäß einem exemplarischen Ausführungsbeispiel der vorliegenden Erfindung.
Fig. 4 zeigt einen Ausschnitt aus dem Verlauf des ZF-Signals der Fig. 3 mit äquidistanten Abtastpunkten gemäß einem exemplarischen Ausführungsbeispiel der vorliegenden Erfindung.
Fig. 5 zeigt einen Ausschnitt aus dem Verlauf des ZF-Signals der Fig. 3 mit paarweiser Abtastung und daraus berechneten Hüllkurvenpunkten gemäß einem exemplarischen Ausführungsbeispiel der vorliegenden Erfindung.
Fig. 6 zeigt den Verlauf des ZF-Signals der Fig. 3 mit Abtastwerten einer paarweisen Abtastung und daraus berechneten Hüllkurven- und Phasenwerten gemäß einem exemplarischen Ausführungsbeispiel der vorliegenden Erfindung.
Fig. 7 zeigt ein Blockschaltbild mit paarweisem ZF-Abtasten und mit nachfolgender digitaler Echosignalverarbeitung gemäß einem exemplarischen Ausführungsbeispiel der vorliegenden Erfindung.
Fig. 8 zeigt ein weiteres Blockschaltbild für paarweises ZF-Abtasten für eine Puls-Laufzeitmessung mit zwei AD-Wandlern gemäß einem exemplarischen Ausführungsbeispiel der vorliegenden Erfindung.
Fig. 9a zeigt verschiedene Abschnitte einer Echokurve mit unterschiedlicher Verstärkung in Form einer Hüllkurve gemäß einem exemplarischen Ausführungsbeispiel der vorliegenden Erfindung.
Fig. 9b zeigt eine weitere Darstellung der verschiedenen Abschnitte einer Echokurve mit unterschiedlicher Verstärkung von Fig. 9a gemäß einem exemplarischen Ausführungsbeispiel der vorliegenden Erfindung.
Fig. 10 zeigt ein Blockschaltbild für eine Messvorrichtung für paralleles Auswerten und Vermessen von Echos gemäß einem exemplarischen Ausführungsbeispiel der vorliegenden Erfindung.
Fig. 11 zeigt ein weiteres Blockschaltbild für paralleles Auswerten und Vermessen von Echos gemäß einem exemplarischen Ausführungsbeispiel der vorliegenden Erfindung.
Fig. 12 zeigt ein Blockschaltbild für paralleles Auswerten und Vermessen von Echos mit getrennten Speicherbereichen zur parallelen Verarbeitung der Echovermessung gemäß einem exemplarischen Ausführungsbeispiel der vorliegenden Erfindung.
Fig. 13 zeigt ein Timingdiagramm für getrennte Speicherung und Verarbeitung für eine Messvorrichtung der Fig. 12 gemäß einem exemplarischen Ausführungsbeispiel der vorliegenden Erfindung.
Fig. 14 zeigt ein Blockschaltbild für paralleles Auswerten und Vermessen von Echos mit vorgelagerter Scharmittelung als eigene Task gemäß einem exemplarischen Ausführungsbeispiel der vorliegenden Erfindung.
Fig. 15 zeigt ein Timingdiagramm für vorgelagerte Scharmittelung und Verarbeitung für eine Messvorrichtung der Fig. 14 gemäß einem exemplarischen Ausführungsbeispiel der vorliegenden Erfindung.
Fig. 16 zeigt ein weiteres Timingdiagramm für vorgelagerte Scharmittelung und Verarbeitung für eine Messvorrichtung der Fig. 14 gemäß einem exemplarischen Ausführungsbeispiel der vorliegenden Erfindung.
Fig. 17 zeigt ein Blockschaltbild eines Messsensors gemäß einem exemplarischen Ausführungsbeispiel der vorliegenden Erfindung.
Fig. 18 zeigt ein Flussdiagramm für ein Verfahren zur Füllstandmessung gemäß einem exemplarischen Ausführungsbeispiel der vorliegenden Erfindung.

Die Darstellungen in den Figuren sind schematisch und nicht maßstäblich.

In der folgenden Beschreibung der Figuren werden die gleichen Bezugsziffern für gleiche oder sich entsprechende Elemente verwendet.

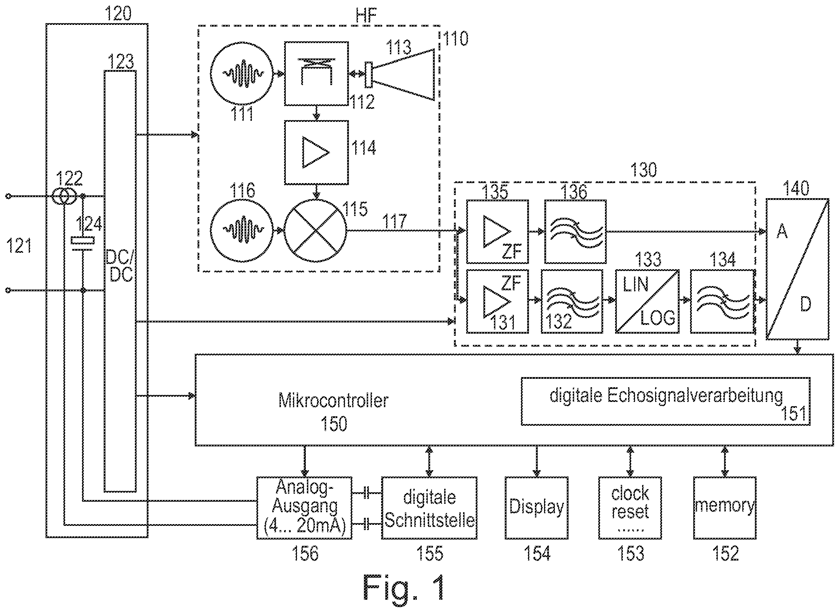

Fig. 1 zeigt ein Blockschaltbild eines Radar-Füllstandsensor, der nach dem Puls-Laufzeit-Verfahren arbeitet zum besseren Verständnis der vorliegenden Erfindung.

Der Laufzeit-Füllstandsensor, insbesondere der Radar-Füllstandsensor weist einen Hochfrequenz-Schaltungsteil 110, ein Netzteil 120, eine analoge Signalverarbeitung 130, einen A/D-Wandler 140 und einen Mikrocontroller 150 mit Peripherie auf. Die in Fig. 1 gezeigten Beispiele von Peripherie sind der Speicher 152, das Display 154, die Takt- und Resetschaltung 153. Der Sensor wird beispielsweise versorgt über die Zweidrahtleitung 121, die ein Teil der Power-Control Loop bildet, über die auch der Füllstandwert in analoger Form ausgegeben wird, von der gesteuerten Stromsenke 122 und dem Regler 156 aufgeprägt als Strom 4 ... 20mA. Auf der Versorgungsleitung 121 kann gleichzeitig auch eine digitale Kommunikation des Sensors mit der Außenwelt stattfinden. Dieses wird physikalisch durch die digitale Schnittstelle 155 ermöglicht. Das Netzteil enthält einen DC/DC-Wandler 123 (Gleichstrom/Gleichstrom-Wandler oder Gleichstrom/Gleichstrom-Umsetzer) mit vorgeschaltetem Speicherkondensator 124 zur Versorgung aller anderen Schaltungsteile.

Die Hochfrequenz-Schaltung 110 enthält einen Sendegenerator 111 zur Erzeugung von hochfrequenten Sendepulsen mit vorgegebener Puls-Wiederholfrequenz. Diese werden über den Richtkoppler 112 oder alternativ über einen Zirkulator 112 an die Antenne 113 geleitet und von dort abgestrahlt. Ein bestimmter Anteil des Sendepulses gelangt über den Richtkoppler 112 direkt zum Empfangsverstärker 114 und bildet eine zeitliche Referenzmarke oder einfacher ausgedrückt ein Referenzecho. Zeitlich danach folgt das Echo von der Reflexion des ausgesandten Sendepulses an der Füllgutoberfläche und eventuelle Störechos, beispielsweise Echos von weiteren vorhandenen Hindernissen im Ausbreitungsweg der Mikrowellen. Störechos können beispielsweise von Leitern, die im Füllgutbehälter angebracht sind oder von Rührwerken herrühren. Diese Echos werden von der Antenne 113 empfangen und über den Richtkoppler 112 zum Empfangsverstärker 114 geleitet.

Sowohl das Referenzecho als auch die weiteren Echos gelangen nach der Verstärkung zum Abtaster bzw. Mischer 115. Dort werden sie mit einer zweiten Pulsfolge mit gleicher Trägerschwingung (gleiche Frequenz) wie die Sendepulse 111, aber leicht unterschiedlicher Puls-Wiederholfrequenz abgetastet. Die zweite Pulsfolge wird im Abtastgenerator 116 erzeugt. Als Ergebnis dieser Abtastung entsteht ein ZF-Signal 117 (Zwischen-Frequenz-Signal), das in zeitgedehnter Form im Wesentlichen alle Echos des hochfrequenten Signals des Empfangsverstärkers 114 aufweist. Das hochfrequente Trägersignal der Sendepulse bzw. der Abtastpulse wird also durch die Abtastung auf ein Signal mit einer niederfrequenten Zwischenfrequenz (ZF) gewandelt, welches in zeitgedehnter Form den gleichen Amplitudenverlauf aufweist wie das hochfrequente Signal des Empfangsverstärkers 114.

Der Amplitudenverlauf des ZF-Signals oder dessen Hüllkurve zeigt die Reflexionsverhältnisse der überwachten Messstrecke, wenn der Amplitudenverlauf des ZF-Signals über der Zeit aufgetragen wird. Bei Füllstandmessgeräten zeigt der Amplitudenverlauf des ZF-Signals oder der Amplitudenverlauf der Hüllkurve also die Reflexionen oder die Echos aus dem Füllgutbehälter. Das analoge Signal, welches durch das Auftragen des Amplitudenverlaufs in seinem Zeitverlauf die Reflexionsverhältnisse der überwachten Messtrecke wiedergibt, wird allgemein als analoge Echokurve oder Echosignal bezeichnet.

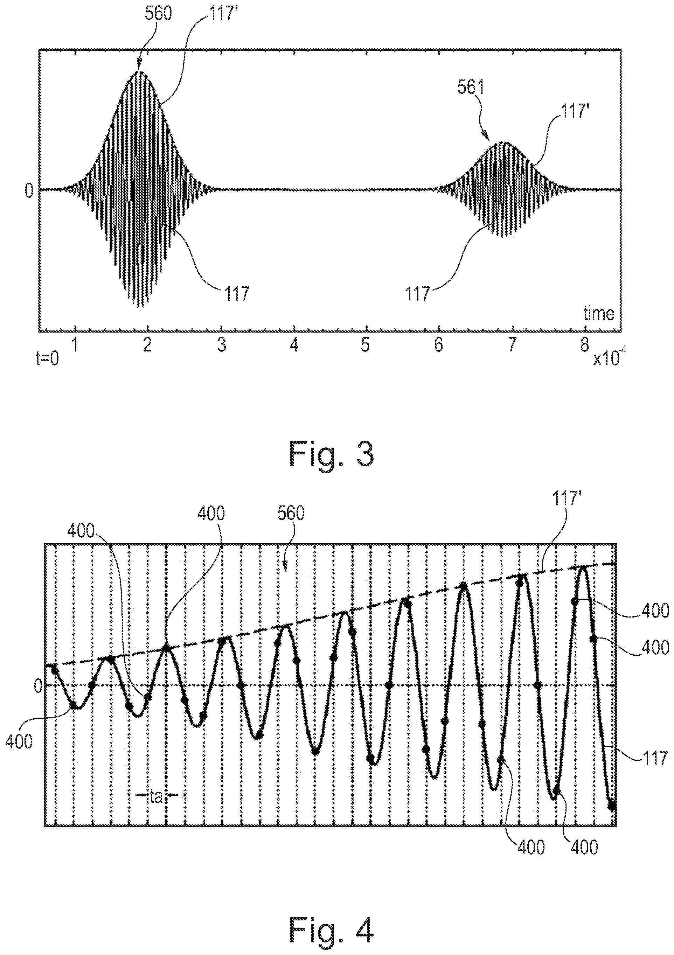

Es wird in diesem Zusammenhang auf die DE 31 074 44 verwiesen, die die Funktionsweise dieses Zeitdehnungsverfahrens detailliert beschreibt. Ein stark vereinfachtes, idealisiertes ZF-Signal 117 zeigt Fig. 3. Das ZF-Signal wird von der Einhüllenden 117' oder von der Hüllkurve 117' umhüllt. In diesem Beispiel mag eine Radar-Frequenz 111 von 24 GHz und ein Zeitdehnungsfaktor von 150 000 gewählt sein. Dadurch entsteht eine um den Faktor 150000 gegenüber der Sendefrequenz reduzierte ZF-Trägerschwingung 117 von 160 kHz. Die sich aus der Lichtgeschwindigkeit ergebende Ausbreitungskonstante der Mikrowellen von etwa 3,33 ns/m wird um den Faktor 150000 gedehnt auf 0,5 ms/m. Bedingt durch Hin- und Rückweg entsteht so auf ZF-Ebene eine Zeitdifferenz von 1 ms zwischen zwei Echos, deren gegenseitiger Abstand 1 m beträgt. Die Echos eines ZF-Signals sind über diesem zeitlichen Massstab aufgetragen.

In dem idealisierten ZF-Signal von Fig. 3 sind der Einfachheit halber nur zwei Echos 560, 561 mit einem gegenseitigen Abstand von etwa 0,5 ms, entsprechend 0,5 m, aufgetragen. Das Echo 560 stellt das Referenzecho dar, während das Echo 561 die Reflexion von der Füllgutoberfläche repräsentiert. Reale ZF-Signale enthalten wie bereits erwähnt oft noch weitere Störechos, die die Auswertung des Signals erschweren können.

Die zeitliche Dauer des ZF-Signals richtet sich nach dem interessierenden Messbereich des Sensors. In dem in Fig. 3 dargestellten Verlauf des ZF-Signals reicht die Dauer des ZF-Signals von t=0ms bis zum Zeitpunkt t=0,85ms und beträgt somit 0,85ms. In Fig. 3 wurde zu Gunsten einer besseren Darstellung der ZF-Schwingung der Messbereich sehr kurz gewählt. Der Messbereich ergibt sich aus der Dauer des ZF-Signals von 0,85ms. Dieser Dauer entspricht folglich ein Messbereich von 0,85m.

Jedes Echo des ZF-Signals besteht aus einer amplitudenmodulierten Trägerschwingung mit der ZF-Frequenz. Die gesuchte Abstandsinformation lässt sich aus dem Amplitudenverlauf und gegebenenfalls auch dem Phasenverlauf der ZF-Schwingung 117 ermitteln.

Zur Gewinnung dieser Informationen wird nach dem in Fig. 1 dargestellten Verfahren bzw. der in Fig. 1 dargestellten Schaltung das ZF-Signal 117 über die analoge Signalverarbeitung 130 aufbereitet und danach mit dem Analog-DigitalWandler 140 in diskrete Digitalwerte gewandelt. Diese Digitalwerte werden im Speicher 152 gesichert, so dass der Mikrocontroller 150 auf die digitalisierten Werte der analogen Echokurve zurückgreifen kann. Diese Digitalwerte können allgemein als digitale Echokurve bezeichnet werden, wobei darunter sowohl abgetastete Werte der ZF-Schwingung 117 als auch daraus abgeleitete Amplitudenwerte 117' und/oder Phasenwerte der ZF-Schwingung fallen. Die abgeleiteten Amplitudenwerte 117' werden als Hüllkurve 117' bezeichnet.

Die Aufbereitung des analogen Signals erfolgt in der dargestellten Ausführungsform der analogen Signalverarbeitung 130 weitgehend getrennt nach der Amplitudeninformation und der Phaseninformation. Für die Amplitudeninformation wird ein Hardware-Logarithmierer 133 genutzt, der das ZF-Signal 117 gleichrichtet und logarithmiert. Zur Anpassung des ZF-Signals 117 an dessen Pegelbereich dient der Verstärker 131, während das Bandpassfilter 132 durch Ausfilterung möglichst aller Störsignale außerhalb des Frequenzbandes der ZF-Frequenz die Detektierbarkeit auch kleinster Echos verbessert. Der Tiefpass 134 hinter dem Logarithmierer glättet die entstandene Hüllkurve durch Entfernung von ZF-Frequenzanteilen.

Übersteigt die Amplitudendynamik im ZF-Signal 117 die Dynamik des Logarithmierers 133, so kann der ZF-Verstärker 131 in seiner Verstärkung variiert werden.

Die Amplitudendynamik kennzeichnet den Bereich zwischen kleinster Amplitude, welche noch detektierbar ist, und größter Amplitude, welche vom System noch ohne größere Verzerrung verarbeitet werden kann. Der Faktor Zeit spielt hierbei keine Rolle. Der Dynamikbereich des Echosignals der HF-Schaltung 110 kann den Dynamikbereich des Logarithmierers 133 übersteigen. Durch die Logarithmierung wird das Echosignal in seiner Dynamik komprimiert, so dass der nachfolgende AD-Wandler 140 das Echosignal im Wesentlichen problemlos verarbeiten kann. Ohne Komprimierung durch Logarithmierung könnte der Echodynamikbereich möglicherweise für den AD-Wandler ein Problem darstellen.

Die Variation der Verstärkung des ZF-Verstärkers, d.h. die Verstärkungsänderung des ZF-Verstärkers 131, kann stufenweise oder kontinuierlich während der Dauer eines ZF-Signals erfolgen oder aber gestuft von einem ZF-Signal zum folgenden. Die so entstandenen digitalisierten logarithmischen Hüllkurven können bei Kenntnis der angewandten Verstärkungsänderung vom Mikrocontroller 150 so korrigiert und zusammengefasst werden, dass korrekte Amplitudeninformationen für alle Echos vorliegen.

Zur Gewinnung der Phaseninformation dient gemäß dem exemplarischen Ausführungsbeispiel der Fig.1 der Signalpfad mit dem ZF-Verstärker 135 und dem Bandpassfilter 136. Der ZF-Verstärker 135 passt das ZF-Signal 117 in der Amplitude an den Spannungsbereich des A/D-Wandlers 140 an und das Bandpassfilter 136 dient gleichzeitig zur Ausfilterung von Rauschanteilen und als Anti-Aliasing-Filter für die nachfolgende Analog-Digital-Wandlung.

Beim Übergang von der analogen in die digitale Ebene sollte das Nyquist-Abtasttheorem beachtet werden, das besagt, dass die Abtastfrequenz mindestens doppelt so hoch sein sollte wie die höchste im Signal vorkommende Frequenz. Um diese Forderung einzuhalten, kann zum einen die analoge Tiefpass- oder Bandpassfilterung des ZF-Signals 117 vor der Abtastung und zum anderen eine eher großzügige Überabtastung eingesetzt werden, was in oben angeführtem Beispiel zu Abtastfrequenzen höher als 500 kHz führen kann. Da wie schon erwähnt die Amplitudendynamik im ZF-Signal 117 sehr groß sein kann, kann es notwendig sein einen A/D-Wandler mit einer hohen Amplitudenauflösung zu wählen, d.h. mit einer hoher Bitbreite. Solche hoch auflösenden A/D-Wandler die gleichzeitig schnell umsetzen sind aber unter den zusätzlichen Gesichtspunkten von geringer Leistungsaufnahme und vertretbaren Kosten kaum verfügbar.

Hinsichtlich einer Reduzierung der erforderlichen Amplitudenauflösung des Wandlers lässt sich auch hier wie oben bei der Bildung der analogen Hüllkurve beschrieben ein analoger ZF-Verstärker 135 mit STC-Funktion (Sensitivity Time Control) oder Verstärker mit gestufter Verstärkung vorsehen.

Bei gestufter Verstärkung können mehrere digitalisierte ZF-Signale unterschiedlicher Verstärkung rechnerisch zu einem kompletten ZF-Signal hoher Dynamik kombiniert werden. Gleiches gilt für die stufenweise Umschaltung der Verstärkung innerhalb eines ZF-Signals 117. Natürlich ist es auch möglich, statt einem in seiner Verstärkung veränderbaren ZF-Verstärker 131, 135 mehrere parallel aufgebaute Verstärker unterschiedlicher Verstärkung zu verwenden, deren Signale vom A/D-Wandler quasi gleichzeitig oder aber hintereinander folgend gewandelt werden. Es ist aber in jedem Fall zu beachten, dass zugunsten reduzierter Amplitudenauflösung des A/D-Wandlers 140 höhere Anforderungen an Abtastfrequenz, Speicherbedarf und/oder Auslastung bzw. Verarbeitungsgeschwindigkeit des Mikrocontrollers 150 zur digitalen Echosignalverarbeitung gestellt werden.

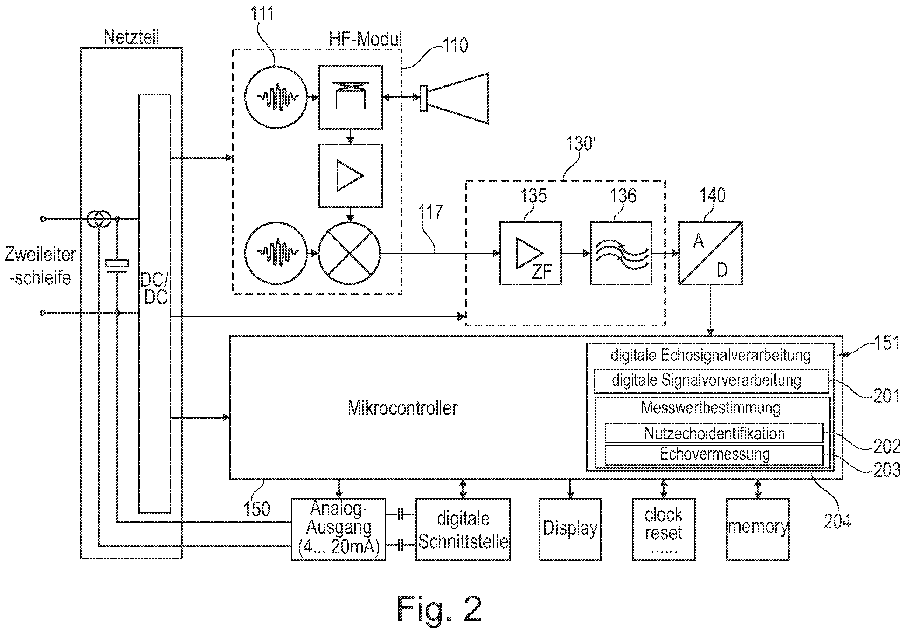

Fig. 2 zeigt ein Blockschaltbild eines Radar-Füllstandsensors ohne direkter Hüllkurvenbildung in der analogen Signalverarbeitung.

Fig. 2 unterscheidet sich dabei von Fig. 1 im Bereich der analogen Signalverarbeitung 130' und in einer detaillierteren Darstellung der digitalen Echosignalverarbeitung 151. Auf den Zweig 131, 132, 133, 134 zur Bildung der analogen logarithmischen Hüllkurve wurde in diesem Beispiel verzichtet, weil sich die Hüllkurve aus den abgetasteten Digitalwerten des ZF-Signals errechnen lässt.

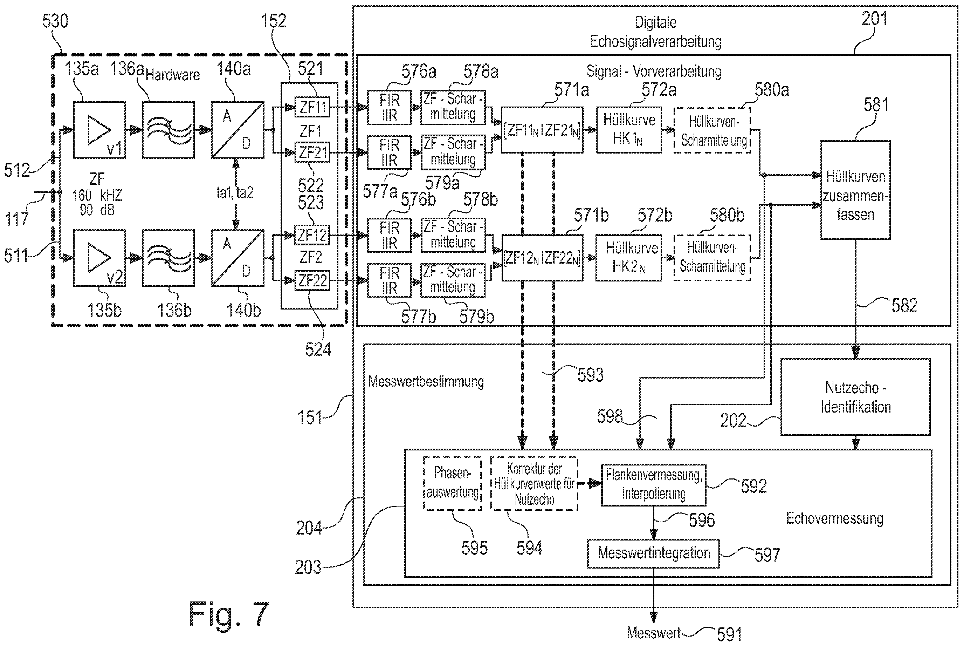

Auf diese Berechnung der Hüllkurve wird näher in Fig. 7 eingegangen.

Über den ZF-Verstärker 135, das Bandfilter 136 und den A/D Wandler (Analog zu Digital Wandler) 140 wird das ZF Signal 117 der digitalen Echosignalverarbeitung 151 zugeführt. Die digitale Echosignalverarbeitung 151 weist eine digitale Signal-Vorverarbeitung 201 oder eine Signal-Vorverarbeitungseinrichtung 201 auf. Außerdem weist die digitale Echosignalverarbeitung 151 die Messwertbestimmung 204 oder eine Messwertbestimmungseinrichtung 204 auf. Diese wiederum enthält eine Nutzechoidentifikation 202 oder Nutzechoidentifikationseinrichtung 202 und eine Echovermessung 203 oder Echovermessungseinrichtung 203. Die Bildung von zwei unabhängigen Tasks findet innerhalb der Echoauswertung 204 oder Messwertbestimmungseinrichtung 204 statt. Eine erste Task mag in der Nutzechoidentifikationseinrichtung 202 ablaufen und eine zweite Task mag in der Echovermessungseinrichtung 203 ablaufen.

Im Zusammenhang mit diesem Text mag ein Funktionsblock 201, 202, 203, 204 eine allgemeine funktionale Einheit oder eine Einrichtung darstellen, welche eine entsprechende Funktion ausführt. Beispielsweise kann ein Funktionsblock als eine Task und/oder als ein integrierter Schaltkreis realisiert sein, d.h. in Software und/oder in Hardware. Eine Task kann beispielsweise auf einem Prozessor 150 oder Mikrocontroller 150 ausgeführt werden.

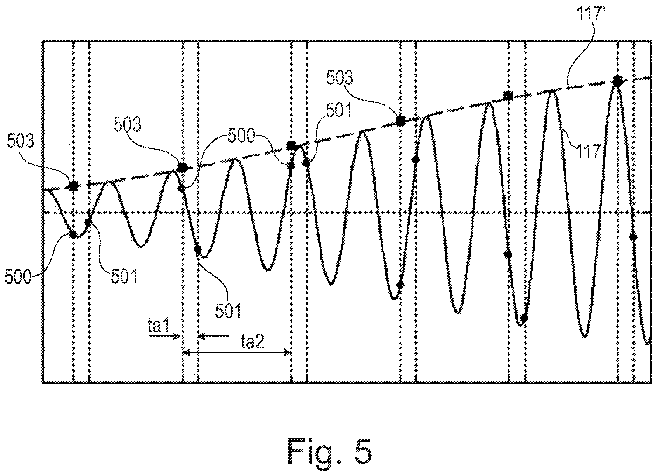

Fig. 4 und Fig. 5 zeigen mittels Ausschnitten aus den Verläufen einer ZF-Kurve, wie aus einer analogen ZF-Echokurve 117 durch zeitdiskrete Abtastung eine digitale Echokurve 400 oder digitale ZF-Echokurve 400 entstehen kann. Ein Ausschnitt eines nach dem Nyquist-Abtasttheorem abgetasteten ZF-Signals 400 zeigt Fig. 4. Dargestellt ist die erste Hälfte des Echos 560 aus Fig. 3 mit der ursprünglichen ZF-Kurve 117 und den äquidistanten Abtastpunkten 400 im Zeitabstand ta, aus denen ein Digitalwert gebildet wird. Gestrichelt eingezeichnet ist außerdem die Hüllkurve 117'. Der in diesem Beispiel dargestellte Abtastabstand ta beträgt 1,95 µs (Micro-Sekunde) oder 1,95 us entsprechend einer Abtastfrequenz von 512 kHz, was etwa das dreifache der ZF-Trägerfrequenz von 160 kHz ist.

Fig. 5 zeigt für den gleichen zeitlichen Ausschnitt aus dem ZF-Signal 117 wie Fig. 4 ein vorteilhaftes Abtastraster einer sogenannten paarweisen Abtastung. Zyklisch werden bei der paarweisen Abtastung zwei Abtastungen 500, 501 im Zeitabstand von tal vorgenommen, wobei der erste Wert 500 einer ersten Gruppe und der zweite Wert 501 einer zweiten Gruppe zugeordnet werden. Diese paarweise Abtastung 500, 501 wiederholt sich mit dem Zeitabstand ta2. Die jeweiligen Abtastwerte 500, 501 sind als Punkte auf dem ZF-Signal 117 eingetragen. Die aus jedem Abtastpaar nach einer Rechenvorschrift errechneten Hüllkurvenwerte 503 sind in Fig. 5 als ausgefüllte Quadrate auf der gestrichelt eingezeichneten idealen Hüllkurve 117' zu sehen. In diesem Beispiel wurde für den Zeitabstand tal eine Zeit entsprechend einem Viertel der Periodendauer der ZF-Frequenz gewählt.

Der Hüllkurvenwert 503 ändert sich in dieser Zeit tal nur unwesentlich, weshalb der entstehende Berechnungsfehler für die Hüllkurve 117' relativ gering bleibt. Die Wahl eines Viertels der Periodendauer kann bei der Bestimmung der Hüllkurve 117' die Berechnung der Werte auf die Bildung der Wurzel aus der Quadratsumme der beiden Abtastwerte 500, 501 vereinfachen. Es sind jedoch auch andere Zeitabstände zwischen den beiden Punkten eines Paars und zwischen den einzelnen Paaren möglich. Es wird in diesem Zusammenhang auf die DE10 2006 006 572 A1 verwiesen.

Mit Hilfe der in Fig. 4 dargestellten oder der in Fig. 5 dargestellten paarweisen Abtastung lassen sich digitale Werte 400, 500, 501 und 503 bilden, welche die Echokurve 117 und/oder die Hüllkurve 117' repräsentieren oder kennzeichnen. Beispielsweise lässt sich aus den paarweise abgetasteten Werten 500, 501 eine angenäherte Hüllkurve 503 eines ZF Signals 117 berechnen. Zusätzlich oder alternativ zur Berechnung der Hüllkurve 503 ist daraus aber auch eine Phasenlage eines Echos berechenbar. In diesem Zusammenhang wird auf die DE 10 2006 006 572 A1 verwiesen.

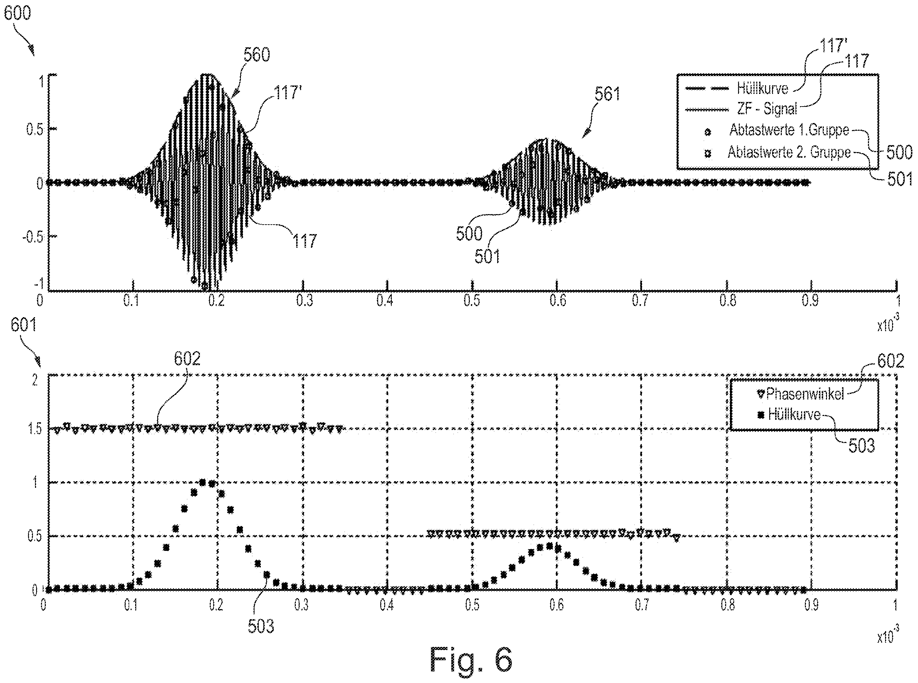

Im oberen Teil 600 der Fig. 6 ist über einer Zeitachse ein idealisiertes ZF-Signal 117 entsprechend dem Signal 117 aus Fig. 3 gezeigt, in welchem Abtastwerte 500, 501 einer paarweisen Abtastung angedeutet sind.

Im unteren Teil 601 sind die aus den abgetasteten Digitalwerten berechnete Hüllkurve 503 und der Verlauf des Phasenwinkels 602 in der Einheit rad gezeigt. Die Gesamtheit dieser digitalen Werte oder aber Teile davon bilden die digitale Echokurve, die die Grundlage der digitalen Echosignalverarbeitung darstellt.

Fig. 7 zeigt ein Blockschaltbild einer analogen und digitalen Signalverarbeitung für einen Puls-Laufzeit-Füllstandsensor gemäß einem exemplarischen Ausführungsbeispiel der vorliegenden Erfindung.

Das Blockschaltbild gemäß Fig. 7 trägt dem Umstand hoher Signaldynamik bzw. Sensorempfindlichkeit dadurch Rechnung, dass das ZF-Signal 117 in zwei parallele Kanäle 512, aufgeteilt wird, in denen ZF-Verstärker 135a und 135b mit unterschiedlicher Verstärkung v1 und v2 vorgesehen sind. Das aufgeteilte Signal 117 wird in beiden ZF-Verstärkern 135a, 135b gleichzeitig verarbeitet. Eine Aufteilung des ZF-Signals in die zwei Kanäle 512, 511 mittels Schaltern wäre denkbar. Entsprechend sind auch zwei analoge Bandpassfilter 136a und 136b und zwei A/D-Wandler 140a und 140b vorhanden. Es wird davon ausgegangen, dass die Auflösung eines einzelnen A/D-Wandlers 140a, 140b alleine nicht ausreicht, um sowohl größte als auch kleinste Echos zu digitalisieren. Wäre dies jedoch möglich, würde ein einkanaliger Aufbau ausreichen.

Jeder A/D-Wandler 140a, 140b wandelt nach dem in Fig. 5 dargestellten Schema oder Abtastraster tal, ta2 der paarweise versetzten Abtastung die Abtastwerte des ZF-Signals 117 in je zwei Gruppen ZF1 und ZF2. die im Speicher 152 zur weiteren digitalen Verarbeitung innerhalb der digitalen Signalverarbeitung 151 gesichert werden. Es sei hier noch angemerkt, dass die Aufgabe der beiden A/D-Wandler auch von einem mit mindestens zwei Eingängen ausgestatteten einzelnen A/D-Wandler übernommen werden kann.

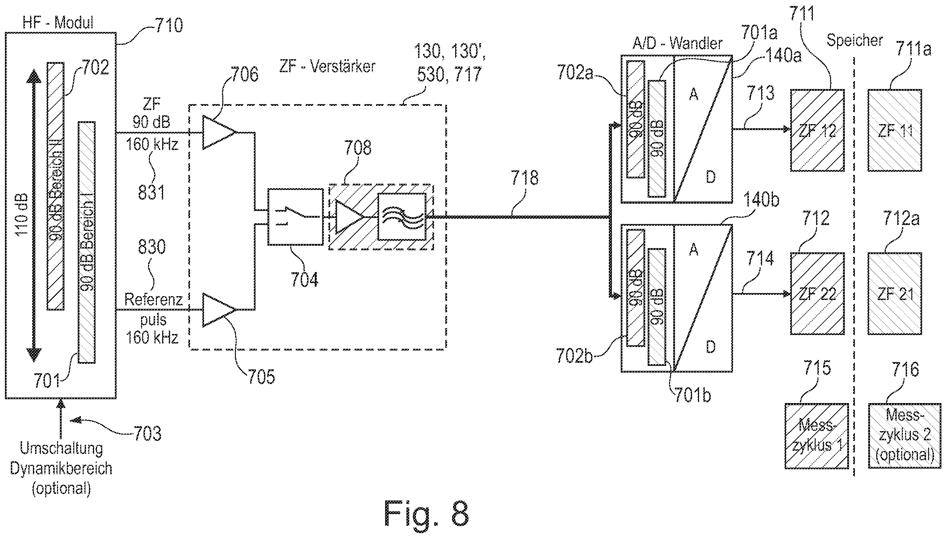

Fig. 8 zeigt ein Blockschaltbild für eine paarweise ZF-Abtastung mit zwei A/D Wandlern gemäß einem exemplarischen Ausführungsbeispiel der vorliegenden Erfindung.

In dem Blockschaltbild gemäß Fig. 8 wird im Unterschied zur parallelen analogen Signalverarbeitung 135a, 135b, 136a, 136b und zur parallelen AD-Wandlung 140a, 140b von Fig. 7 die Aufteilung in zwei verschiedene Dynamikbereiche nicht gleichzeitig oder parallel sondern zeitlich aufeinander folgend mit einer dazwischen liegenden Umschaltung vorgenommen. Die beiden in Fig. 8 dargestellten AD-Wandler 140a, 140b dienen hier nicht der Aufteilung in zwei Dynamikbereiche, sondern hier wird bezogen auf eine paarweise Abtastung der ZF-Kurve jeweils ein Abtastpunkt eines Paars von dem einen AD-Wandler 140a, der andere Abtastpunkt des Paars von dem zweiten AD-Wandler 140b gewandelt.

Fig. 8 zeigt dazu eine analoge Signalverarbeitungsstufe 130, 130', 530, 717 die von dem HF-Modul 710 bis zu dem Speicher 711, 712, 711a, 712a reicht. Die analoge Signalverarbeitungsstufe 130, 130', 530, 717 basiert auf analogen Signalverarbeitungsverfahren. Während in dem Blockschaltbild der Fig. 7 ein Umschalten der Verstärkung durch getrennte Wege 512, 511 erreicht wird und somit innerhalb der ZF-Stufe 530 oder der ZF-Verstärker-Stufe 530 erfolgt, erfolgt das Umschalten in dem Blockschaltbild nach Fig. 8 durch Umschalten innerhalb des HF-Moduls 710.

In anderen Worten, zeigt Fig. 8 eine weitere Möglichkeit des Umschaltens. In Fig. 7 liegen die beiden getrennten Kanäle 511, 512 vor. In Fig. 8 entstehen die beiden Kanäle intern im HF-Modul durch die Umschaltung 703 (Bereich I und Bereich II). Fig. 8 unterscheidet sich dadurch, dass, abweichend zu der Darstellung in Fig. 3, Referenzecho 560 und die übrigen Echos aus der überwachten Messstrecke nicht als einheitliches Zeitsignal, sondern als zwei getrennte Signale vorliegen, die zeitlich zueinander korreliert sind. Es erfolgt eine Trennung des Referenzechos 560 oder Referenzpulses 601 von den übrigen Echos 603, 607, 608, einschließlich dem Nutzecho 607. Diese Trennung kann eine örtliche Trennung, d.h. eine Trennung in unterschiedliche Kanäle 830, 831, und/oder eine zeitliche Trennung sein. Es mag also ein Orts-Multiplexen und/oder ein Zeit-Multiplexen bzw. ein Orts-Demultiplexen und/oder ein Zeit-Demultiplexen durchgeführt werden.

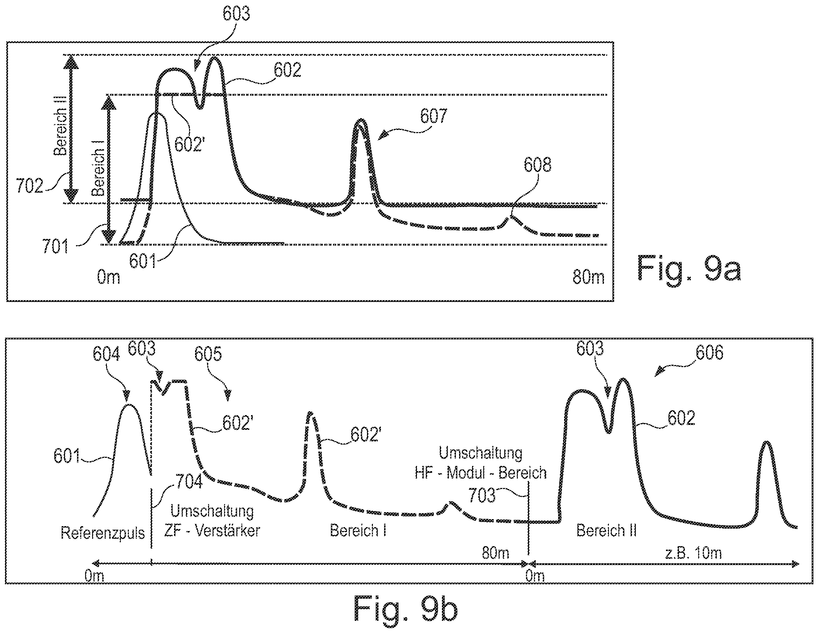

Die Darstellung in der Fig. 9a, zeigt die zeitliche Korrelation der Signale, wobei die zeitliche Korrelation durch die gemeinsame Zeitachse ausgedrückt ist.

In Fig. 7 wird angenommen, dass das Referenzecho und übrige Echos in einem gemeinsamen Signal vorhanden sind und die "Umschaltung" der Verstärkung oder das "Umschalten" der Verstärkung keine echte Umschaltung, sondern eine Aufteilung auf zwei parallele Kanäle mit unterschiedlichen Verstärkungen ist.

In Fig. 8 wird im Unterschied dazu gezeigt, dass das Referenzecho 560, 601 und übrige Echos voneinander getrennt in zwei Signalen existieren, zwischen denen eine Umschaltung möglich ist. Außerdem geschieht die Umschaltung der Verstärkung im HF-Modul und ist eine echte Umschaltung, d.h. es ist entweder ein weniger verstärktes Signal (Bereich II) oder ein mehr verstärktes Signal (Bereich I) am gleichen Ausgang 831 verfügbar.

Zwischen den Dynamikbereichen 701, 702 der analogen Signalverarbeitungsstufe 130, 130', 530, 717 und insbesondere zwischen den Dynamikbereichen 701a, 702a, 701b, 702b der A/D Wandler 240a, 240b kann mittels einer HF-Umschaltung 703 umgeschaltet werden. Die HF-Umschaltung 703 kann beispielsweise einen HF-Sendeverstärker oder einen HF-Empfangsverstärker in der Verstärkung umschalten. Beispielsweise kann zwischen zwei unterschiedlich großen Verstärkungen geschaltet werden.

Ferner kann mittels des Schalters 704 zwischen zwei ZF-Verstärkern 705, 706 umgeschaltet werden. Der erste ZF-Verstärker 706 verstärkt dabei das bislang beschriebene ZF-Signal mit den Reflexionen der Messstrecke. Der zweite ZF-Verstärker 705 liefert ein verstärktes ZF-Signal eines Referenzpulses 601 (der Referenzpuls 601 ist in Fig. 9a lediglich als Hüllkurve und nicht als ZF-Signal dargestellt). Der Referenzpuls wird beispielsweise intern in der HF-Schaltung 110 als separates Echo aus dem Sendepuls heraus erzeugt, welches durch die interne Erzeugung als Ortsreferenz bzw. Zeitreferenz für die über die Antenne 113 empfangenen Echos dient. Der Schalter 704 kann beispielsweise derart eingerichtet sein, dass der Schalter 704 nach dem vollständigen Empfangen des Referenzpulses von dem ersten ZF-Verstärker 705 auf den zweiten ZF-Verstärker 706 umschaltet. Alternativ kann das Umschalten auch nach dem Empfangen eines Teils des Referenzpulses erfolgen, z.B. bei der absteigenden Flanke.

Nachdem das jeweilige Signal den Schalter 704 durchlaufen hat, kann eine weitere Verstärkung und Bandpassfilterung des jeweils über den Schalter 704 ausgewählten ZF-Signals im ZF-Verstärker 708 erfolgen. Auch hier sei angemerkt, dass das jeweilige Signal 601, 602, 602' das ZF-Signal ist und nicht die Hüllkurve, die zur Vereinfachung in Figs. 9a, 9b dargestellt ist. Das an dem Ausgang des Schalters 704 und insbesondere an dem Ausgang der Signalstrecke 708 anstehende ZF-Signal wird über die Strecke 718 auf die beiden AD-Wandler 140a, 140b zur paarweisen Abtastung aufgeteilt. Der erste AD-Wandler 140a wandelt beispielsweise immer den ersten Wert 500 eines Abtastpaars, während der zweite AD-Wandler 140b immer den zweiten Wert 501 wandelt. In anderen Worten mag das bedeuten, dass die AD-Wandler 140a, 140b die gleichen Kurven erhalten. Der erste Wandler mag die ersten Werte 500 und der zweite Wandler die zweiten Werte 501 abtasten. So mag jeder Wandler nur einen Teil der Abtastwerte 500, 501 generieren. Die Abtastzeitpunkte des ersten AD-Wandlers und des zweiten AD-Wandlers mögen um tal verschoben sein.

Da die Zeitabstände tal zwischen den beiden Werten eines Paars deutlich kleiner sind als die Zeitabstände ta2 zwischen aufeinanderfolgenden Paaren, lassen sich durch diese Anordnung AD-Wandler mit relativ niedriger Abtastrate z.B. 1/ta2 verwenden.

Es ist auch möglich, alle Punkte 500, 501 oder Abtastwerte 500, 501 mit einem einzigen entsprechend schnellen AD-Wandler zu wandeln. Ebenso ist es auch nicht zwingend notwendig, die Abtastung paarweise vorzunehmen. Eine äquidistante ZF-Abtastung unter Beachtung des Nyquist-Theorems, also bei einer ZF-Frequenz von beispielsweise 160kHz mindestens mit einer Abtastfrequenz größer 320kHz, führt ebenso zu einer für die digitale Echosignalverarbeitung auswertbaren digitalen Echokurve. Die Anforderungen bezüglich der Leistungsfähigkeit der AD-Wandler und damit möglicher weise die Kosten können bei dem Einsatz schneller AD-Wandler hoch ausfallen.

Für den Fall, dass in der HF-Schaltung über die HF-Umschaltung 703 eine geringe Verstärkung vorgegeben ist, werden die eher großen Echos aus Dynamikbereich II 702 den beiden Gruppen ZF12 und ZF22 über die beiden AD-Wandler in den hierfür reservierten Speicherbereichen 711, 712 zugeordnet. In den Dynamikbereich II können der Referenzpuls und/oder das Antennenklingeln fallen.

Für den Fall, dass in der HF-Schaltung über die HF-Umschaltung 703 hohe Verstärkung vorgegeben ist, werden die eher kleinen Echos aus Dynamikbereich I 701 den beiden Gruppen ZF11 und ZF21 über die beiden AD-Wandler 140a, 140b in den hierfür reservierten Speicherbereichen 711a, 712a zugeordnet. In den Dynamikbereich I mag das Nutzecho fallen.

Zur Verdeutlichung der Signale in Fig. 8 dienen die in Fig. 9 dargestellten Echokurven, wobei zur Vereinfachung der Darstellung nur die Hüllkurven der in Fig. 8 beschriebenen ZF-Signale dargestellt sind. Diese vereinfachte Darstellung zeigt somit nicht die ZF-Signale der Kanäle 831, 830 sondern deren Repräsentation als Hüllkurve. Die Schaltung gemäß Fig. 8 verarbeitet dagegen die ZF-Signale, deren Einhüllende durch die Hüllkurven von Fig. 9 wiedergegeben werden.

Fig. 9a zeigt dabei die 3 verschiedenen ZF-Signale aufgetragen auf einer gemeinsamen Orts- bzw. Zeitachse entsprechend der Entfernung der jeweiligen Reflexion vom Sensor. Der intern erzeugte Referenzpuls 601 weist dabei wegen seiner nur kurzen Laufzeit die geringste Entfernung auf

Somit zeigt Fig. 9a drei im Wesentlichen parallel verfügbare Signale 601, 602, 602' über einer gemeinsamen Zeitachse. Die Signale 601, 602, 602' beginnen bei 0m und enden spätestens nach 80m. Ein Signal, das nicht im ganzen Bereich 0m ... 80m interessante Verläufe erzeugt, kann aber zum Teil auch in einem kürzeren Intervall untersucht werden und somit früher abgebrochen werden. Für den Referenzpuls 601 kann der Signalverlauf beispielsweise nach einer Entfernung von 3...5m uninteressant sein. Für den Bereich II der großen Signale 602 kann z.B. nur ein Bereich bis 10m interessant sein, da dahinter meist keine großen Signale oder große Echos 603 erwartet werden. Das Abbrechen des Auswertens der Signale kann durch ein entsprechendes Ansteuern der Schalter 703, 704 beeinflusst werden.

Sowohl Bereich I als auch Bereich II stehen am gleichen Ausgang 831 des HF-Moduls an, während der Referenzpuls am Ausgang 830 ansteht.

Der Referenzpuls 601 lässt sich von den beiden AD-Wandlern 140a, 140b abtasten, wenn der Schalter 704 oder ZF-Umschalter 704 auf den Verstärker 705 geschaltet ist. Die dabei über die HF-Umschaltung 703 oder HF-Modul-Umschaltung 703 eingestellte Verstärkung ist für den Referenzpuls 601 im Wesentlichen nicht relevant, da beispielsweise der Referenzpuls 601 die schaltbaren Sende- und Empfangsverstärker (in Fig. 8 nicht gezeigt) der HF-Schaltung 110, 710 nicht durchläuft, sondern intern einen separaten Weg vom Sendepulsgenerator 111 zum Referenzpuls-ZF-Ausgang nimmt. Es könnte auf diesem Weg ebenfalls ein separater Abtaster (nicht gezeigt in Fig. 8) für den Referenzpuls vorgesehen sein.

Der Referenzpuls 601 ist direkt, d.h. ohne an der Füllgutoberfläche reflektiert zu werden, an den Modulausgang 830 des HF-Moduls 710 gelangt. Somit werden bei dem Referenzpuls keine zwei Dynamikbereich unterschieden.

Das Empfangssignal 602 ist nach der Reflexion an der Füllgutoberfläche über den Richtkoppler 112 und den Verstärker 114 an den HF-Modul-Ausgang 117, gelangt.

Ist der ZF-Schalter 704 auf den Ausgang des Verstärkers 706 geschaltet und gleichzeitig die HF-Umschaltung 703 auf niedriger Verstärkung, dann lassen sich ZF-Signale aus dem Dynamikbereich II 702 abtasten. Diese großen Echosignale, d.h. Echosignale mit einer großen Amplitude, sind in Fig. 9a mit der durchgezogenen Linie 602 dargestellt.

Im Bereich kurzer Echoentfernungen können ebenfalls große Reflexionsamplituden oder große Echosignale von Echos 603 entstehen, die im Dynamikbereich II noch ohne Verzerrung verarbeitet werden können. In diesem Beispiel ist ein Dynamikbereich am ZF-Ausgang der HF-Schaltung 710 von 90dB angenommen. Das bedeutet, dass im Bereich II noch Signale, insbesondere Echosignale, erkennbar sind, die 90dB kleiner sind als große Echos, deren Amplituden gerade noch nicht verzerrt oder begrenzt werden. Der Dynamikbereich I und der Dynamikbereich II umfassen 90dB.

Da der Referenzpuls 601 über einen separaten Kanal zu dem Kanal 830 gelangt, wirken die unterschiedlichen Dynamikbereiche I, II 701, 702 nur auf den ZF-Kanal 831, nicht jedoch auf den Referenzpulskanal 830.

Um auch noch kleinere Echos wie beispielsweise das Echo 608 erkennen zu können, die außerhalb des Dynamikbereichs II liegen, kann die HF-Umschaltung 703 auf hohe Verstärkung umschalten. Das entsprechende Hüllkurvensignal ist in Fig. 9a als gestrichelte Kurve 602' in Dynamikbereich I dargestellt. Große Echos 603 werden in ihrer Amplitude begrenzt, aber kleinste Echos wie das Echo 608 lassen sich in diesem Bereich noch detektieren. In anderen Worten werden durch die zusätzlich zugeschaltete Verstärkung in dem HF-Modul 710 große Echos, wie das Echo 603 über den Dynamikbereich I hinaus geschoben und abgeschnitten, wodurch die Kurve 602' entsteht.

Die gezeigte Kombination der beiden Dynamikbereiche I und II mit jeweils 90dB erlaubt so dem Sensor, insgesamt beispielsweise 110dB Gesamtdynamik verarbeiten zu können. Der HF-Umschalter 703 schaltet eine zusätzliche Verstärkung von 20 dB zu, was in Fig. 9a durch eine Verschiebung der Untergrenze des Dynamikbereichs I unter die Untergrenze des Dynamikbereichs II dargestellt ist. Die Hüllkurven 602 und 602' lassen sich dazu beispielsweise zu einer einzigen Kurve kombinieren, indem entfernungs- und amplitudenabhängig die Hüllkurvenwerte aus dem gerade besser geeigneten Bereich ausgewählt werden

Im Überlappungsbereich beider 602, 602' lässt sich ein evtl. noch gewichteter Mittelwert aus beiden Bereichen verwenden. Im Überlappungsbereich sollten sich die Werte zwar bis auf einen Verstärkungsunterschied (z.B. 20dB) aus beiden Bereichen entsprechen. Durch den gewichteten Mittelwert aus beiden Bereichen können geringfügige Differenzen oder andere Fehlereinflüsse ausgeglichen werden, die auftreten können.

In Fig. 9b ist ein beispielhafter zeitlicher Ablauf der Erzeugung der in Fig. 9a dargestellten Signale gezeigt. Der Fig. 9b ist zu entnehmen, wie durch zeitliches Umschalten des ZF-Schalters 704 und der HF-Umschaltung 703 im HF Modul 710 die unterschiedlichen Dynamikbereiche I, II zeitlich hintereinander behandelt werden. Da es sich bei der Echokurve 602, 602' um ein periodisch wiederkehrendes Signal handelt, können die unterschiedlichen Signale 602', 602 der unterschiedlichen Dynamikbereiche zeitlich getrennt voneinander ausgewertet werden. Die Länge des zu untersuchenden Bereichs kann über die Schaltdauer der entsprechenden Schalter gesteuert werden. So ist das Signal 602' im Entfernungsbereich von 0m bis 80m dargestellt. Dagegen ist das Signal 602 im Entfernungsbereich 0m bis 10m dargestellt. Es ist auch möglich, die Kurve 602 bis 80m darzustellen und in der Signalverarbeitung auszuwerten, aber in diesem Beispiel wurde auf den Bereich zwischen 10m und 70m bzw. zwischen 10m und 80m verzichtet, weil dort nur Echos erwartet werden, deren Amplitude den Bereich I nicht übersteigen. In einer Totzeit, z.B. im Bereich II zwischen 10 und 80m, kann auf die Erzeugung und Abtastung des Echosignals verzichtet werden, was zu einer Einsparung an Energie führt.

Im Folgenden wird die Abfolge der in Fig. 9b dargestellten Signale erklärt. Der Signalverlauf beginnt zeitlich mit dem Referenzpuls 601. Wenn die abfallende Flanke des Referenzpulses erscheint, wird vom Umschalter 704 von Kanal 830 auf Kanal 831 umgeschaltet. Diese Umschaltung ist durch einen idealen Sprung dargestellt. Zu der Zeit des Umschaltens liegt das Signal 602' auf dem Kanal 830 bereits an. Das Umschalten erfolgt folglich innerhalb des Signals 602' etwa in der Mitte des großen Pulses 603, wie er in Fig. 9a dargestellt ist. In anderen Worten, folgt der Signalverlauf, der in Fig. 9b dargestellt ist, ab der Umschaltung dem entsprechenden Verlauf der Kurve 602'. Das bedeutet, dass vom Referenzpuls 601, also nach dem Referenzpuls 601 mittels Schalter 704 auf das Signal aus dem Bereich I umgeschaltet wird. Zu diesem Zeitpunkt ist, wie aus Fig. 9a ersichtlich ist, schon ein Teil des ersten, großen Echos 603 aus Bereich I vorüber.

Unter Beibehaltung der Schalterstellung des Schalters 704 wird nach einer Zeitdauer, die der Entfernung 80m entspricht, auf den Bereich II umgeschaltet. Diese Umschaltung kann beispielsweise mittels HF-Modul Umschaltung 703 oder HF-Modul-Bereichs-Umschaltung 703 erfolgen. Das nun anliegende Echosignal wird in einem kürzeren Bereich II, beispielsweise von 0m bis 10m untersucht. Da die Bereiche I und II auf demselben periodischen Echosignal basieren stimmen die Signalverläufe im Wesentlichen überein, bis auf die unterschiedliche Verstärkung. Daher weisen die Signalverläufe 602', 602, insbesondere im Bereich der Einkerbung des großen Echos 603, eine ähnliche Struktur auf. Aufgrund der Periodizität der Echokurve lassen sich die Bereiche I und II zeitlich hintereinander abbilden. Die verschiedenen Zeitdauern der Umschaltungen sind in Abhängigkeit von der Anwendung einstellbar gestaltet.

Nach dem Untersuchen des Signals im Dynamikbereich II kann die Kurve der Fig. 9b periodisch fortgesetzt werden (nicht gezeigt in Fig. 9b).

In anderen Worten bedeutet das, dass die Zeitachse bzw. die Entfernungsachse für die Echos nahe dem Wert Null mit dem Referenzpuls 601 beginnt. Kurz nach dem Maximum des Referenzpulses 601 wird der ZF-Schalter 704 auf den Verstärker 706 umgeschaltet, der bei eingeschalteter hoher Verstärkung (Dynamikbereich I) innerhalb der HF-Schaltung 710 Echos 603 aus der Messtrecke mit großer Amplitude liefert, welche sich zum Zeitpunkt der Umschaltung gerade sehr nahe bei 0m befinden können. Dabei kann die Amplitude der nahen Echos wegen der hohen Verstärkung begrenzt sein oder die Amplitude kann abgeschnitten werden. Im Bereich I sollen zwar die schwachen und weit entfernten Echos hervorgehoben werden. Trotzdem werden die nahen Echos abgebildet auch wenn sie bis zur Begrenzung verstärkt werden.

Anschließend werden, während noch der Dynamikbereich I aktiv ist, im Wesentlichen alle Reflexionen aus der Messstrecke bis zu einer interessierenden maximalen Entfernung empfangen, in dem Beispiel der Fig. 9b bis zu einer Entfernung von 80m. Wegen der hohen Verstärkung des Dynamikbereichs I werden auch kleine Echos 608 sichtbar. Die Echobreiten sind in Fig. 9b nicht maßstäblich zu dem angedeuteten Messbereich von 80m dargestellt.

Anschließend, d.h. nach Umschalten des Schalters 703, wird die Verstärkung durch die HF-Umschaltung 703 verringert und die Echokurve aus dem Bereich II wird nun beginnend bei der Entfernung 0m abgetastet. Große Echos 603 werden im Dynamikbereich II im Wesentlichen nicht in der Amplitude verfälscht. Wie in Fig. 9b angedeutet ist kann es ausreichen, dieses im Wesentlichen unverstärkte Signal nur bis zu einer Entfernung von etwa 10m aufzuzeichnen. In einem möglicherweise anschließenden Totzeit-Bereich kann beispielsweise Energie gespart werden oder eine andere Aufgabe ausgeführt werden.

Es kann angenommen werden, dass Echos die in einer Entfernung größer als 10m liegen in ihrer Amplitude auch im Idealfall nicht so groß werden, dass sie im Bereich I an die Begrenzung stoßen.

Um 90dB Dynamik eines Bereichs verarbeiten zu können, sollten die beiden AD-Wandler 140a, 140b beispielsweise 18 Bit Amplitudenauflösung besitzen. Werden Wandler mit geringerer Auflösung verwendet, so reduziert sich die Dynamik der beiden Bereiche I, II, welche von den AD-Wandlern bearbeitet werden können. Eine entsprechend gleich hohe Gesamtdynamik lässt sich dann durch einen stärkeren Verstärkungsunterschied zwischen den beiden Bereichen I, II und damit weniger Überlappung erreichen.

Besitzen die ZF-Echosignale der HF-Schaltung weniger Gesamtdynamik, so kann eine Umschaltung der beiden Bereiche I, II abgeschaltet werden, da sie dann überflüssig ist.

Die digitalisierten Abtastwerte ZF12, ZF11, ZF12, ZF22 des ZF-Signals 117 bilden die Datenbasis für den in Fig. 7 dargestellten Funktionsblock der digitalen Echosignalverarbeitung 151, welcher sich an die AD-Wandlung und die möglicherweise Speicherung anschließt.

Der zunächst folgende Teil der digitalen Echosignalverarbeitung 151 ist die Signal-Vorverarbeitung 201, die durch geeignete Rechenoperationen die vorliegende Datenbasis, z.B. aus dem Speicher 711, 711a, 712, 712a, oder dem Speicher 521, 522, 523, 524, so aufbereitet oder manipuliert, dass sie in einer für die nachfolgende Messwertbestimmung 204 angepassten Form vorliegt.

Die jeweils zwei Gruppen von Digitalwerten, von denen die Gruppen ZF11 521, 711a und ZF21 522, 712a beispielsweise kleine Echos und die Gruppen ZF12 523, 711 und ZF22 524, 712 große Echos entsprechend einem Verhältnis von v1 > v2 repräsentieren, werden dazu beispielsweise bei Bedarf gruppenweise digital gefiltert (FIR Finite Impulse Response; IIR Infinite Impulse Response) 576a, 576b, 577a, 577b und kohärent schargemittelt 578a, 578b, 579a, 579b.

Eine Scharmittelung bedeutet eine Mittelwertbildung über Abtastwerte verschiedener aufeinander folgender ZF-Signale der gleichen Gruppe, wobei die Abtastwerte der gleichen Echolaufzeit entsprechen. Wird die Scharmittelung vor der Bildung der Hüllkurve durchgeführt, spricht man von kohärenter Scharmittelung oder auch predetection integration, bei Scharmittelung der Hüllkurvenwerte von inkohärenter Scharmittelung oder postdetection integration. Obwohl durch beide Scharmittelungsverfahren das Rauschen gegenüber dem Echosignal im Wesentlichen unterdrückt wird, kann die kohärente Scharmittelung in dieser Beziehung deutlich effektiver sein. Eine kohärente Scharmittelung mag sich nach dem beschriebenen Verfahren einfach durch eine getrennte Scharmittelung der verschiedenen Abtastgruppen anwenden lassen. Verglichen mit der inkohärenten Scharmittelung, die natürlich alternativ oder zusätzlich mit den errechneten Hüllkurvenwerten durchführbar ist, ist der Rechenaufwand lediglich verdoppelt. Bei dem Verfahren der kohärenten Scharmittelung geht die Mittelung über alle Abtastpunkte der paarweisen Abtastung. Weil aus genau zwei Abtastpunkten genau ein Hüllkurvenpunkt errechenbar ist, ist die Anzahl der Abtastpunkte genau doppelt so hoch wie die Anzahl der Hüllkurvenpunkte. Damit ist auch der Rechenaufwand der kohärenten Scharmittelung doppelt so hoch wie bei der inkohärenten Scharmittelung.

Kleine Echos mag bedeuten, dass die Amplitude der Hüllkurve der ZF gering sein mag. Die Filterung und/oder Scharmittelung bietet sich auf jeden Fall für die Gruppen der kleinen Echos 512 an, da dort Echos vom Rauschen teilweise überdeckt sein können. Danach werden Paare 571a, 571b, 500, 501 aus den abgetasteten ZF Werten gebildet, aus denen die Hüllkurvenwerte 572a, 572b, 503 berechnet werden.

Nach einer bedarfsweisen inkohärenten Scharmittelung 580a, 580b kombiniert man die beiden getrennten Hüllkurven (HK) für große Echos HK 2_{N} 572b und kleine Echos HK 1_{N} 572a zu einer Gesamthüllkurve 581. Dazu ist lediglich die Kenntnis des Verstärkungsunterschieds zwischen v1 und v2 sowie eine gewisse Überlappung der beiden Dynamikbereiche der Kanäle 512, 511 notwendig. In anderen Worten, kann das in den Figs. 9a und 9b beschriebene Verfahren sozusagen in umgekehrter Richtung angewendet werden. Durch diese Aufteilung in kleine 511 und große 512 Echos können Kosten gespart werden, da Komponenten wie die A/D Wandler 140a, 140b eingesetzt werden können, die nicht den gesamten Dynamikbereich aller nur erdenklich vorkommenden Signale abdecken müssen.

Ein weiterer Teil der Signal-Vorverarbeitung 201, der in Fig. 7 nicht dargestellt ist, kann eine Subtraktion von einmalig - beispielsweise beim Vermessen des Behälters - oder auf Bedienereingabe hin gespeicherten Störechos sein. Die auf Basis der Hüllkurvenwerte oder der ZF-Werte gespeicherten Störechos, die die Reflexionsverhältnisse bei teilweise oder vollständig geleertem Füllgutbehälter repräsentieren, werden von den aktuell abgetasteten bzw. berechneten Werten subtrahiert, um die aktuelle Echokurve von den störenden Einflüssen der Reflexionen zu befreien, die nicht vom Füllgut stammen.

Diese Subtraktion kann auf Basis der digitalisierten ZF-Werte durchgeführt werden, wobei sich sehr genaue Ergebnisse erzielen lassen mögen. Zu dieser Berechnung auf ZF-Level werden sowohl die aktuellen Echokurven als auch die Störechokurven als abgetastete ZF-Werte gespeichert. Es könnte so auch auf eine Betrachtung der Hüllkurve verzichtet werden.

Bei der Subtraktion von aktueller Echokurve und Störechokurve auf Basis der Hüllkurvenwerte kann es vorkommen, dass sich bei Echos, welche sich teilweise überlagern, diese Überlagerung abhängig von der Phasenlage der beiden Echos zueinander unterschiedlich ausprägen kann. Das Ergebnis könnte also von einer zufälligen Phasenlage der Kurven zueinander abhängen. Bei Phasengleichheit addieren sich die beiden Anteile, während bei Gegenphasigkeit eine gegenseitige Subtraktion stattfindet. Entsprechend mag eine Bereinigung einer Echokurve mit zwei sich überlagernden Echos um eines der beiden Echos nicht möglich sein, wenn nicht die Phase der zu Grunde liegenden ZF-Kurven berücksichtigt wird. Bei einer Betrachtung auf Hüllkurvenebene mag jedoch die Phasenlage im Wesentlichen nicht möglich sein, da durch das Bilden der Hüllkurve nur noch die Amplitudeninformation, nicht aber die Phaseninformation des ursprünglichen ZF-Signals vorhanden sein mag.

Die berechnete Gesamthüllkurve 581, 582 bildet die Grundlage für die Nutzechoidentifikation 202 , die das Füllgutecho oder Nutzecho aus der Gesamtheit aller Echos eines Kurvenzugs identifiziert. Das Nutzecho mag das Echo sein, welches von der Füllgutoberfläche erzeugt wird. Geringe Amplitudenfehler oder Rundungen bei der Hüllkurvenberechnung 581 sind ebenso wie eine Reduzierung der zeitlichen Auflösung für diesen Auswertungsschritt ohne weiteres zu tolerieren.

Zum Identifizieren 202 oder Auswerten 202 des gesuchten Echos, d.h. zum Bestimmen einer Position eines Echos innerhalb der Echokurve, können beispielsweise die im Folgenden beschriebenen Verarbeitungsschritte eingesetzt werden.

Zuerst werden aus der Gesamtheit des ZF-Signals oder aus der Echokurve einzelne Echos separiert und hinsichtlich ihrer Merkmale charakterisiert. Die Detektion der Echos stützt sich beispielsweise auf eine Schwellwertkurve, die dem Gerät entweder fest vorgegeben ist oder während des Betriebs dynamisch erzeugt wird. Die gespeicherten Hüllkurvenwerte werden hinsichtlich ihrer Amplitude mit der zeitabhängigen Schwelle verglichen. Hüllkurvenwerte, die über der Schwelle liegen, weisen auf ein Echo an dieser Stelle oder an dieser Position hin. Um nur die relativ größten Echos eines ZF-Signals zu detektieren ist es möglich, die Schwelle schrittweise abzusenken, bis eine genügende Anzahl von Echos detektiert ist.

Detektierte Echos werden auf Merkmale wie beispielsweise Maximalamplitude, Rauschabstand, Echolänge, Echoform, Mittelwert, Schwerpunkt und Flankensteilheit hin charakterisiert. Diese Merkmale können es ermöglichen die Form des jeweils untersuchten Echos zu bestimmen. Aus den Echomerkmalen lassen sich in gewissem Masse auch Rückschlüsse auf die Art des Behälters, die Beschaffenheit der Füllgutoberfläche und die Umgebungsbedingungen ziehen. Außerdem lassen sich aus den gegenseitigen Echoabständen bestimmte Reflexionsverhältnisse innerhalb des Behälters wie z.B. schräg liegende Schüttgutoberflächen oder mehrfach reflektierende gewölbte Behälterdecken ableiten. Diese Informationen können zum einen dazu beitragen, anwendungsbezogene Softwareparameter zur verbesserten Verarbeitung der abgetasteten Echowerte auszuwählen, und zum anderen dem Anwender neben der reinen Füllstandinformation auch weitergehende Hinweise zu den Umgebungsbedingungen im Behälter, der Funktionssicherheit des Sensors und der Messung im allgemeinen zu geben.

Aus der Gesamtheit der Echos eines ZF-Signals wird schließlich anhand aller gesammelten Merkmale das Echo von der Füllgutoberfläche identifiziert, d.h. das Nutzecho wird identifiziert.

Die Identifikation des Referenzechos mag im Vergleich zur Identifikation des Nutzechos einfacher sein, da das Referenzecho bezogen auf den Messbeginn im Wesentlichen immer an der gleichen Stelle erscheint und als Echo mit der kürzesten Laufzeit im Wesentlichen nicht von Reflexionen aus dem Behälter gestört sein kann.

Der zweite Teil der Messwertbestimmung ist die Echovermessung 203. Die Echovermessung 203 nutzt die Ergebnisse der Nutzechidentifikation 202, kann aber parallel zu der Nutzechoidentifikation ausgeführt werden.

Um zu einem Messwert 591 für den Füllstand zu gelangen wird der zeitliche Abstand zwischen dem Referenzecho und dem identifizierten Füllgutecho bestimmt 592. Diese Vermessung 592 stützt sich zunächst einmal auf die digitalen Hüllkurvenwerte 593 beider Echos (der großen und der kleinen Echos). Es werden folglich nicht die abgetasteten ZF Werte betrachtet. Da diese aber geringe Berechnungsfehler enthalten können, kann für eine begrenzte Anzahl von Hüllkurvenpunkten ein weiteres Verfahren zur genaueren Berechnung der Hüllkurvenpunkte angewendet werden. Statt der betreffenden Hüllkurvenpunkte 598 lassen sich beispielsweise diejenigen Punkte der Hüllkurve - alle Punkte der Hüllkurve für das Referenzecho und das Nutzecho - im Zeitbereich der beiden zu vermessenden Echos, d.h. des Referenzechos und/oder des Nutzechos direkt aus den Abtastpaaren 571a, 571b, 593 der ZF-Kurve genauer berechnen. Die Information über deren zeitliche Lage wird von dem Block zur Nutzecho-Identifikation 202 an den Block zur Korrektur der Hüllkurvenwerte 594 innerhalb der Echovermessung 203 übergeben. Für die gleichen Punkte kann auch eine Berechnung der Phase 595 durchgeführt werden, um die Messgenauigkeit weiter zu steigern. Bezüglich der Art und Weise der Einbeziehung von Phasenwerten zur Verbesserung der Messgenauigkeit wird hier auf die DE 44 07 369 verwiesen.

Bei den Funktionsblöcken 202, 203, 581, 594, 595 und 592 kann es sich um Tasks oder entsprechende Einrichtungen handeln, welche die Tasks ausführen.

Bei der Vermessung des Echoabstands 592 zwischen Referenzecho und Nutzecho auf Basis der Hüllkurvenwerte mag der Abstand zwischen den jeweiligen Maxima des Referenzechos 560 und des Nutzechos 561 den Echoabstand nur sehr ungenau beschreiben. Daher mag in einem Beispiel die Messung zwischen Punkten auf den Echoflanken eingesetzt werden, deren Amplitude in einem definierten Verhältnis zur jeweiligen Maximalamplitude des Echos steht. In einem weiteren Beispiel können Zwischenpunkte zu den ermittelten Hüllkurvenpunkten im Bereich der zu vermessenden Echoflanken interpoliert werden. Die ermittelten Hüllkurvenpunkte werden aus je einem Abtastpaar im Abstand von tal errechnet, wie in Fig.5 dargestellt ist. Zur Interpolation der Zwischenpunkte können Interpolationsverfahren wie beispielsweise lineare Interpolation, Polynom-Interpolation oder Spline-Interpolation eingesetzt werden.

Alternativ hierzu gibt es auch Verfahren, bei denen die Lage eines Echos dadurch bestimmt wird, dass ein vorher definiertes Normalecho bzw. ein Abschnitt eines solchen mit den Punkten des aktuell zu vermessenden Echos mathematisch bestmöglich zur Deckung gebracht wird. Ein Normalecho ist eine Reflexion eines idealen Reflektors, z.B. Flüssigkeitsoberfläche, während das Normecho oder Störecho ohne das Vorhandensein einer Flüssigkeit ermittelt wird.

Aus der durch das In-Deckung-bringen festgelegten Lage des Normalechos ergibt sich die gesuchte zeitliche Lage des aktuellen Echos. In die gleiche Richtung zielen auch Verfahren zur Korrelation der ZF-Kurve oder der Hüllkurve mit diesem Normalecho. Beispielsweise wird eine Korrelation auf ZF-Ebene durchgeführt. Zu dem Zeitpunkt, an dem das Korrelationsergebnis maximal ist, passt das Normalecho am besten auf die betreffende Kurve, weshalb dieser Zeitpunkt auch gleichzeitig die zeitliche Lage des Echos repräsentiert.

Auch die Subtraktion auf ZF-Ebene des gemessenen Echos und einer Störechokurve kann die Ermittlung des Abstandes des Referenzechos 560 und des Nutzechos 561 unterstützen.

Nach der Vermessung 592 entsteht pro Messzyklus ein Messwert 596 für die Entfernung des Füllgutechos 561 oder Nutzechos 561 vom Referenzecho 560. Dieser kann unter Kenntnis der festgelegten Sensor- und Behälterparameter in eine Füllhöhe umgerechnet werden.

Die Messgenauigkeit mag sich schließlich dadurch erhöhen lassen, dass solche Messwerte 596 verschiedener aufeinander folgender Messzyklen gemittelt werden 597. Die Zeitkonstante der Mittelung kann beim Mitteln fest eingestellt sein oder aber auch dynamisch angepasst werden. Unterscheiden sich neu ermittelte Messwerte nur gering vom zuvor ermittelten Messwert, wird die Zeitkonstante bis zu einem gewissen Grad erhöht. Falls aber mehrere neue Messwerte hintereinander sich davon unterscheiden, deutet das auf Füllgutbewegung hin und die Zeitkonstante sollte verkleinert werden. Ebenso ist es in bestimmten Fällen nützlich, eine Hysterese für die Messwertausgabe vorzusehen. Dies hat dann seine Berechtigung wenn davon auszugehen ist, dass sich die Bewegungsrichtung der Füllgutoberfläche nur selten umkehrt und für diesen Fall eine geringe Verzögerung der ausgegebenen Messwerte in Kauf genommen wird. Der auf diese Art festgelegte Messwert 591 ist schließlich derjenige, der vom Sensor als Füllstand analog und/oder digital ausgegeben wird.

Somit wurde gezeigt, dass durch das Abtasten von wenigen Werten des ZF-Signals eine Hüllkurve und/oder ein Phasenwinkel des ZF-Signals aus jeweils nur zwei Abtastpunkten berechnet werden kann. Damit kann ein Bedarf an Speicherplatz 152 und Rechenzeit für die Digitalisierung und Auswertung des ZF-Signals 117 reduziert werden, ohne auf die Vorteile zu verzichten, die eine überwiegend digitale Signalverarbeitung bieten mag. Eine digitale Signalverarbeitung erlaubt beispielsweise, dass man frei von Bauteiletoleranzen ist, dass die Verarbeitung leicht an verschiedene Sensorparameter angepasst werden kann, dass durch digitale Filterung und durch kohärente bzw. inkohärente Scharmittelung der Signal-RauschAbstand erhöht werden kann und dass durch Auswerten der Phase oder der Phaseninformation die Messgenauigkeit erhöht werden kann.

Ferner besteht die Möglichkeit, dass die Abtastfrequenz an verschiedene Sensortypen und an verschiedene Leistungsversorgungen der Sensoren angepasst werden kann. Bei Zweileitersensoren mit analoger Messwertausgabe in Form des zwischen 4 und 20 mA aufgenommenen Stroms ist die für den Sensor zur Verfügung stehende Leistung relativ gering. Diesem Umstand kann durch Anpassen der Abtastfrequenz begegnet werden. Es mag sogar möglich sein innerhalb einer ZF-Kurve die Abtastfrequenz zu variieren, um z.B. die interessierenden Bereiche von Referenzecho und Füllgutecho feiner abzutasten als die restlichen Bereiche ohne die zu vermessenden Echos.

Die digitale Echosignalverarbeitung mit den Komponenten Signalvorverarbeitung 201 und Messwertbestimmung 204 kann seriell abgearbeitet werden, wobei die Messwertbestimmung wiederum in die Funktionsblöcke Nutzechoidentifikation 202 und Echovermessung 203 aufgeteilt ist. Die von der Hardware gelieferte analoge Echokurve 117 wird nach Digitalisierung mit Hilfe der Signalvorverarbeitung 201 zu einer digitalen Echokurve 582. Die digitale Echokurve 582 wird an den Funktionsblock Nutzechoidentifikation übergeben und von dem Funktionsblock Nutzechoidentifikation hinsichtlich der Position des Nutzechos der Lage des Nutzechos analysiert. Schließlich wird diese Position, beispielsweise in Form eines Entfernungsbereichs, an den Funktionsblock Echovermessung 203 übergeben, welcher innerhalb des übergebenen Bereichs eine genaue Vermessung des Nutzechos durchführt. Bei dem übergebenen Bereich oder bei der analysierten Position kann es sich um eine grobe Lage des Echos handeln.

Der serielle Ablauf kann jedoch aufgebrochen werden, um durch eine parallele Verarbeitung oder durch eine verschachtelte Verarbeitung des Funktionsblocks Nutzechoidentifikation und des Funktionsblocks Echovermessung sowohl eine ausführliche, gründliche und aufwendige Nutzechoidentifikation als auch eine schnelle Aktualisierung des Messwerts zu erreichen. Der Funktionsblock Nutzechoidentifikation mag ein Nutzecho identifizieren und der Funktionsblock Echovermessung mag ein Echo vermessen. In anderen Worten führt der Funktionsblock Nutzechoidentifikation die Task Nutzechoidentifikation 202 aus und der Funktionsblock Echovermessung mag die Task Echovermessung 203 ausführen.

Die parallele Nutzechoidentifikation 202 und Vermessung der Echos 203 erlaubt, dass die Vermessungs-Task 203 im Wesentlichen nur eine Auswahl von den ZF-Kurven-Werten verarbeiten muss. D.h. die von der Vermessungs-Task 203 zu verarbeitende Anzahl an Parametern oder Werten ist gegenüber der Anzahl von ZF-Kurven-Werten für die gesamte Echokurve reduziert.

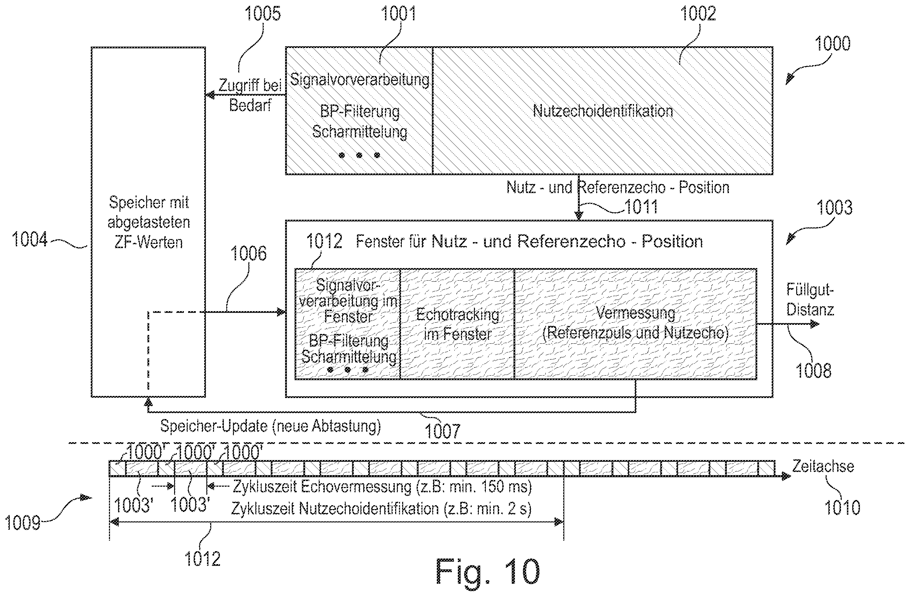

Fig. 10 zeigt ein Blockschaltbild für eine Messvorrichtung zur digitalen Echosignalverarbeitung für paralleles Auswerten und Vermessen von Echos gemäß einem exemplarischen Ausführungsbeispiel der vorliegenden Erfindung.

Das Blockschaltbild der Fig. 10 zeigt zwei Tasks 1000, 1003 oder zwei Funktionsblöcke 1000, 1003, die auf einen gemeinsamen Speicher 1004 zugreifen. In dem Speicher 1004 sind die abgetasteten ZF-Werte gespeichert. Insbesondere sind in dem Speicher 1004 die paarweise abgetasteten ZF-Werte gespeichert. Die Task 1000 für die Nutzechoidentifikation einer Echokurve greift bei Bedarf auf den gemeinsamen Speicher 1004 über die Speicheranbindung 1005 zu. Die Auswertetask 1000 kann beispielsweise auf einem integrierten Schaltkreis mit einem eigenen oder einem geteilten Prozessor implementiert werden und realisiert dann eine Auswerteeinrichtung 1000 einer Analyseeinrichtung.

Die Auswertetask 1000 umfasst den Funktionsblock der Signalvorverarbeitung 1001, der beispielsweise die Bandpassfilterung und Scharmittelung der aus dem Speicher 1004 übernommenen abgetasteten ZF-Werte aufweist. Außerdem bezeichnet der Funktionsblock Nutzechoidentifikation 1002 die Einrichtung zur Bestimmung der Echopositionen sowohl des Nutzechos als auch des Referenzechos. Die Auswertung 1000 umfasst nicht die Messwertermittlung, d.h. das Ermitteln des Messwertes der Füllstandhöhe erfolgt in einem separaten Funktionsblock 1003. Allerdings wird von der Nutzechoidentifikation 1002 beispielsweise eine ungefähre Lage der Nutzechoposition und/oder Referenzechoposition ermittelt. Die zugehörigen Positionen können auch Bereiche sein, welche als entsprechende Fenster bezeichnet werden mögen. Die ermittelten Bereiche für die Lage eines Echos werden der zweiten Task 1003 oder der Echovermesstask 1003 über die Verbindung 1011 von der Auswertetask 1000 zur Verfügung gestellt. Die Verbindung 1011 kann eine Kommunikationsverbindung zwischen zwei Prozessen sein , eine Kommunikationsbeziehung oder auch eine Leitung, über welche die zwei Schaltkreise 1000, 1003 miteinander kommunizieren können. Die Schaltkreise 1000, 1003 mögen die Funktionen Auswertung und Vermessung der Echokurve erfüllen. Somit erhält die Vermesstask 1003 jeweils ein Fenster oder einen Fensterbereich für die Nutzechoposition und/oder Referenzechoposition. Die Werte innerhalb dieser Fenster können von der Echovermesstask 1003 innerhalb einer Signalvorverarbeitung 1012 bearbeitet werden.

Die Signalvorverarbeitung 1012 zur Weiterverarbeitung der Echokurve innerhalb des Fensters kann ebenfalls eine Bandpassfilterung und/oder Scharmittelung oder andere Vorverarbeitungsfunktionen umfassen. Außerdem kann zu einer genaueren Positionsbestimmung eine Echoverfolgung über mehre Echokurven, das sogenannte Echotracking, innerhalb des Fensters durchgeführt werden. Durch das Echotracking, welches sich auf den relativ kleinen Entfernungsbereich eines Fensters beschränkt, kann ein sich innerhalb des Fensters bewegendes Nutz- oder Referenzecho verfolgt werden, so dass die nachfolgende Echovermessung daraus die Information erhält, an welcher Stelle innerhalb des Fensters das jeweilige Echo zu vermessen ist.

Schließlich erfolgt auch die Vermessung des Referenzpulses und/oder des Nutzechos innerhalb des vorgegebenen Fensterbereichs. Sowohl für den Referenzpuls als auch für das Nutzecho kann ein separates Fenster generiert werden. Referenzpuls und Nutzecho können aber auch innerhalb eines gemeinsamen Fensters liegen. Beim Vermessen des Referenzpulses und/oder des Nutzechos kann eine detaillierte Auswertung erfolgen, da im Verhältnis zur Ausdehnung einer Echokurve oder eines Echoprofils nur ein Ausschnitt der Echokurve oder des Echoprofils und damit aus der Gesamtheit aller abgetasteten ZF-Werte einer Echokurve nur ein Bruchteil dieser Werte betrachtet werden muss. Dieser Ausschnitt umfasst den Teilbereich der Echokurve, welcher durch die Bereichsgrenzen des Fensters vorgegeben ist.

Somit steuert in anderen Worten ausgedrückt die Auswertetask 1000 oder die Auswerteeinrichtung 1000 einen Auswertebereich oder ein Fenster derart über die Echokurve, dass mit einer hohen Wahrscheinlichkeit das Nutzecho und/oder das Referenzecho oder ein anderes interessantes Echo in dem Fenster zu liegen kommt. Da sich die Lage des Fensters nur sehr langsam verändert, kann für die Auswertetask eine geringe Messrate oder Wiederholrate eingesetzt werden. In anderen Worten heißt das, dass die Bearbeitung der Task zur Auswertung, das heißt die Task zum Verschieben des Fensters über die Echofunktion, in größeren Zeitabständen erfolgt als die Detailbestimmung oder Vermessung des Echos innerhalb dieses Fensterbereiches. Die Echos werden innerhalb des Fensters untersucht, um möglichst genau die Positionen der tatsächlichen Echos zu bestimmen. Aus diesen Positionen kann ein Abstand der Echos zueinander bestimmt werden, wobei der Abstand in einen Füllstand umgerechnet werden kann.

Bei der Vermessung durch die Vermesstask 1003 oder mittels der Vermesseinrichtung 1003, welche die Vermesstask ausführt, können dabei auch rechenintensive Operationen eingesetzt werden, da der Bereich, über den diese Operationen durchgeführt werden, auf den Fensterbereich beschränkt ist.

Das Positionieren des Fensters über der Echokurve und somit das Auswählen eines interessanten Bereiches kann im Wesentlichen unabhängig von dem eigentlichen Vermessen des Echos erfolgen. Somit können die Auswerteeinrichtung 1000 und die Vermesseinrichtung 1003 im Wesentlichen unabhängig voneinander agieren. Auswerteeinrichtung 1000 und Vermesseinrichtung 1003 bilden eine Analyseeinrichtung. Lediglich notwendige Informationen wie beispielsweise die Positionsangaben für das Fenster oder Statusinformationen werden über die Kommunikationsverbindung 1011 ausgetauscht. In einem Beispiel kann auch der Speicher 1004 zum Austauschen von Informationen genutzt werden.

Zur Auswertung der Echokurve bzw. der Echofunktion greifen die beiden Tasks 1000, 1003 auf den Speicher 1004 mit den abgetasteten ZF- Werten zu. Die Speicherung der ZF- Werte kann eine Reduktion der zu speichernden Daten bedeuten, da die ZF- Werte beispielsweise paarweise abgetastet werden und möglicherweise in größeren Zeitabständen als durch das Nyquist-Kriterium vorgegeben abgetastet werden können. Das paarweise Abtasten kann so nicht nur die Anzahl digitalisierter Daten reduzieren sondern auch das Nach-Verarbeiten beschleunigen.

In dem Speicher 1004 ist eine digitale Repräsentation der Echokurve oder des Echoprofils abgespeichert. Sowohl die Auswerteeinrichtung 1000 als auch die Vermesseinrichtung 1003 können über die Zugriffsverbindungen 1005, 1006 auf den Speicher und somit auf die aktuell gespeicherte Echofunktion zurückgreifen. Die ZF-Werte erlauben unter Tolerieren eines vorgebbaren geringen Fehlers eine Hüllkurve der Echofunktion aus den ZF- Werten der ZF-Echofunktion wiederzugewinnen. Bei Bedarf, beispielsweise nach dem Ablaufen eines Zeitglieds, kann über die Speicherupdateverbindung 1007 von der Vermesseinrichtung 1003 eine neue Abtastung oder Aufnahme der Echofunktion angeregt werden. Ein innerhalb der Fenster liegender Teil der abgetasteten ZF- Werte wird in die Vermesseinrichtung 1003 oder Vermessungseinrichtung 1003 eingelesen und nach der durchgeführten Vermessung oder Echopositionsbestimmung wird über die Ausgabeverbindung 1008 eine Füllgutdistanz an einen Benutzer oder an eine Weiterverarbeitungseinrichtung weitergereicht (nicht in Fig. 10 gezeigt). Durch die Abtrennung und parallele Verarbeitung der Echovermessung in Block 1003 von der Nutzechoidentifikation im Block 1000 kann die Sensormessrate erhöht werden.

Die Erhöhung der Sensormessrate wird in dem zu dem Blockschaltbild gehörenden Zeitdiagramm 1009 erläutert. Entlang der Zeitachse 1010 ist eine Belegung eines gemeinsam genutzten Prozessors durch die Auswerteeinrichtung 1000 und durch die Vermessungseinrichtung 1003 dargestellt. Die Auswerteeinrichtung 1000 belegt jeweils für die mit Bezugszeichen 1000' bezeichneten Zeitscheiben (ein Intervall auf dem Zeitstrahl 1010) den gemeinsam benutzten Prozessor. Ein Auswertezyklus hat beispielsweise die Zykluszeit von mindestens zwei Sekunden. Das heißt die Zeit, die die Auswerteeinrichtung 1000 zum Nachführen des Fensters benötigt, kann in der Größenordnung von 2 Sekunden liegen. Oder in anderen Worten, nach einer Zeitdauer von 2 Sekunden stellt die Auswerteeinrichtung 1000 eine neue Fensterposition zur Auswertung des Nutz- und/oder Referenzechos zur Verfügung. Während der Zykluszeit der Auswertung bleibt die Position des Fensters jedoch konstant.

Die Task der Auswertung 1012 ist in viele kleine Unterzeitscheiben 1000' aufgeteilt, um für die Auswerte-Task eine Unterbrechung durch Vermesstasks 1003' zu ermöglichen. Erst nach dem Ablaufen der Zykluszeit für die Nutzechoidentifikation ist eine einzige Nutzechoidentifikationstask 1012 abgeschlossen. Im Gegensatz zu der Auswertetask 1012 bezeichnen die Vermesstasks 1003' jeweils abgeschlossene Vermessungszyklen. Am Ende jedes Vermesszyklus 1003' liegt ein neuer Messwert vor. Beispielsweise kann ein Vermessungszyklus mindestens 150 ms betragen. Für die in Fig. 10 dargestellte verschachtelte Verarbeitung der beiden Softwareblöcke oder Tasks 1000, 1003 oder der Auswerteeinrichtung 1000 und der Vermesseinrichtung 1003 können während einem Auswertezyklus von 2 Sekunden 9 Vermessungen 1003' durchgeführt werden, bevor das Fenster an eine neue Position verschoben wird.

Bei der verschachtelten Verarbeitung gemäß dem Zeitdiagramm 1009 handelt es sich um einen periodischen Vorgang, das heißt nach Abschluss einer Auswertezykluszeit 1012 oder einer Nutzechoidentifikationszykluszeit 1012 schließt sich eine neue Auswertezykluszeit an. Das Verhältnis der prozentualen Verteilung der Bearbeitungszeiten der beiden Tasks 1012, 1003' oder das Tastverhältnis kann einstellbar sein. Entsprechend der Anzahl der Unterbrechungen kann die Zykluszeit 1012 für die Auswertung verlängert oder verkürzt werden. Die Vermesstask kann im Gegensatz zum vollständigen Ausführen auch in mehrere Unterzeitscheiben aufgeteilt sein.

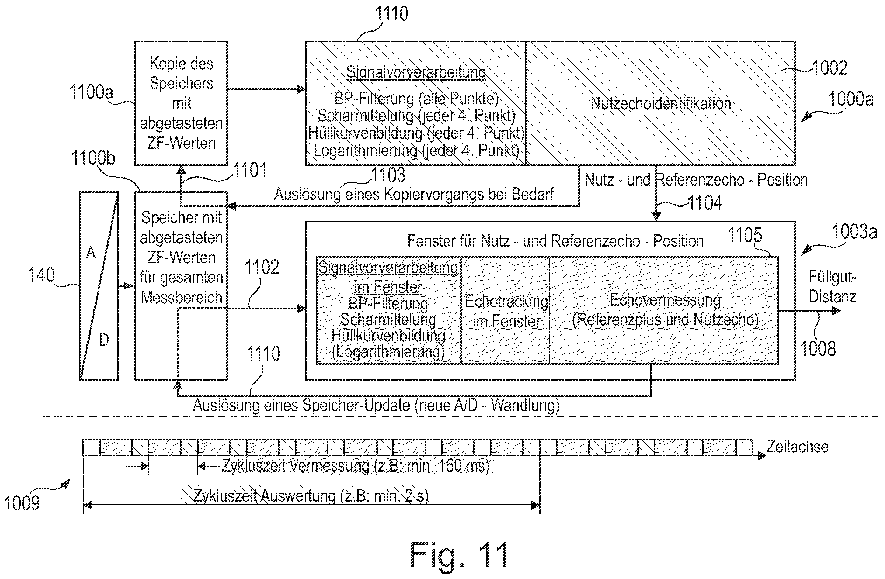

Fig. 11 zeigt ein weiteres Blockschaltbild für paralleles Auswerten und Vermessen von Echos gemäß einem exemplarischen Ausführungsbeispiel der vorliegenden Erfindung.

Das als Variante A bezeichnete Blockschaltbild weist die Auswerteeinrichtung 1000a und die Echovermessung 1105 auf. Die Auswerteeinrichtung 1000a oder Auswertetask 1000a weist neben der Nutzechoidentifikationsvorrichtung 1002 die Signalvorverarbeitung 1110 auf. Die Signalvorverarbeitung 1110 weist die Bandpassfilterung, die Scharmittelung, die Hüllkurvenbildung und das Logarithmieren auf. Eine Messwertermittlung findet in der Auswertetask nicht statt.

Die Bandpassfilterung (FIR oder IIR) sollte mit allen Punkten, das heißt mit allen ZF-Abtastwerten, getrennt nach Gruppen wie in Zusammenhang mit Fig. 7 beschrieben ist, durchgeführt werden, während für die Scharmittelung, die Hüllkurvenbildung und die Logarithmierung die Anzahl der Punkte reduziert werden kann. Beispielsweise können diese Operationen nur zu jedem 4. Punkt, das heißt für jeden 4. Abtastpunkt oder für jedes 4. Paar von Abtastpunkten durchgeführt werden.

Es muss nicht jeder Abtastpunkt oder Abtastwert ausgewertet werden, da für die Nutzechoidentifikation 1002 eine gröbere zeitliche Auflösung der Echokurve durchaus akzeptabel ist. In einer sowohl zeitlich als auch amplitudenmäßig gröber aufgelösten Echokurve lassen sich Echos im Wesentlichen genau so gut detektieren und hinsichtlich der Nutzechoentscheidung untersuchen, wie bei Verwendung aller im Speicher verfügbaren Punkte. Durch die Reduzierung der Punktanzahl lässt sich aber in vorteilhafter Weise zusätzlich Berechnungszeit einsparen.
Der in Fig. 10 als gemeinsamer Speicher gezeichnete Speicher mit abgetasteten ZF-Werten 1004 ist gemäß dem Ausführungsbeispiel der Fig. 11 in einen Auswertespeicher 1100a und einen Vermessungsspeicher 1100b aufgeteilt. Der Auswertespeicher 1100a enthält eine Kopie des Vermessungsspeichers mit abgetasteten ZF- Werten. Der Vermessungsspeicher 1100b ist ein Speicher mit abgetasteten ZF- Werten für den gesamten Messbereich der Echokuve.

Über die Speicherkommunikationsverbindung 1101 wird eine Kopie der Abtastwerte an den Auswertespeicher 1100a für die Auswertefunktion 1000a zur Verfügung gestellt. Die Funktion Nutzechoidentifikation 1002 löst dabei über die Auslöseverbindung 1103 einen Kopiervorgang der ZF- Werte aus. Der Speicher mit den abgetasteten ZF- Werten 1100b wird über den A/D-Wandler 240 mit entsprechenden ZF- Werten versorgt. Die Vermesseinrichtung 1003a kann über die Speicheranbindung 1102 auf die gespeicherten ZF- Werte zugreifen. Mittels der erhaltenen Werte aus dem Speicher kann die Vermesseinrichtung 1003a eine Signalvorverarbeitung innerhalb des Fensters durchführen. Das heißt diese Signalvorverarbeitung, beispielsweise die Bandpassfilterung, die Scharmittelung, die Hüllkurvenbildung und gegebenenfalls die Logarithmierung kann auf das von der Auswertetask 1000a vorgegebene Fenster beschränkt werden. Entsprechend werden über die Speicheranbindung 1102 in einem Beispiel nur die in den Fensterbereich fallenden Speicherwerte des gesamten Messbereichs übertragen.

Im Gegensatz zur Signalvorverarbeitung innerhalb der Auswertetask 1000a werden in der Signalvorverarbeitung der Vermesseinrichtung 1003a aber alle vorliegenden Abtastpunkte innerhalb der Fenster verarbeitet. Eine Datenreduktion durch Verzicht auf einen Teil der Punkte und damit eine gröbere zeitliche Auflösung findet in diesem Teil nicht statt, weil hier zur genauen Vermessung der Echoposition alle Echopunkte beitragen können.

Nach einer Auswertung des Fensterbereichs kann über die Auslöseverbindung 1110 eine Auslösung eines Speicherupdates von der Vermesseinrichtung 1003 durchgeführt werden. Nach Auslösen eines Speicherupdates werden über den A/D-Wandler 140 neue A/D gewandelte Werte einer entsprechenden Echofunktion oder Echokurve in dem Speicher 1100b abgelegt. Die Aufteilung der Prozessrechenzeit erfolgt wie in Fig. 10 gemäß dem Prozessorzuteilplan 1009 oder Schedule 1009 als verschachtelte Verarbeitung mittels der Auswertefunktion oder Auswerteeinrichtung 1000a und der Vermessfunktion 1003a oder Vermesseinrichtung 1003a.

Eine Vermessfunktion bzw. Auswertefunktion mag eine Funktion oder eine Software zur Steuerung einer Auswerteeinrichtung 1000a bzw. Vermesseinrichtung 1003a sein.

Bei der in Fig. 11 dargestellten Variante A eines Messsensors, der auf dem Abtrennen und parallelen Verarbeiten der Echovermessung beruht, wird die Abtastung oder A/D-Wandlung durch den Softwareblock Vermessung 1105 auf der Vermesseinrichtung 1003a ausgelöst. Bei der Variante A wird eine Kopie der ZF-Abtastwerte für die Nutzechoidentifikation verwendet.

Die ZF-Scharmittelung innerhalb des Fensters oder Fensterbereichs kann schneller als über den gesamten Messbereich der Echofunktion oder über die gesamte Echokurve durchgeführt werden. Die Echodatenbasis für die Auswertefunktion 1002 ist eine Kopie der Abtastwerte. Die Kopie der Abtastwerte ist in dem der Auswerteeinrichtung 1000a zugeordneten Speicher 1100a abgelegt.

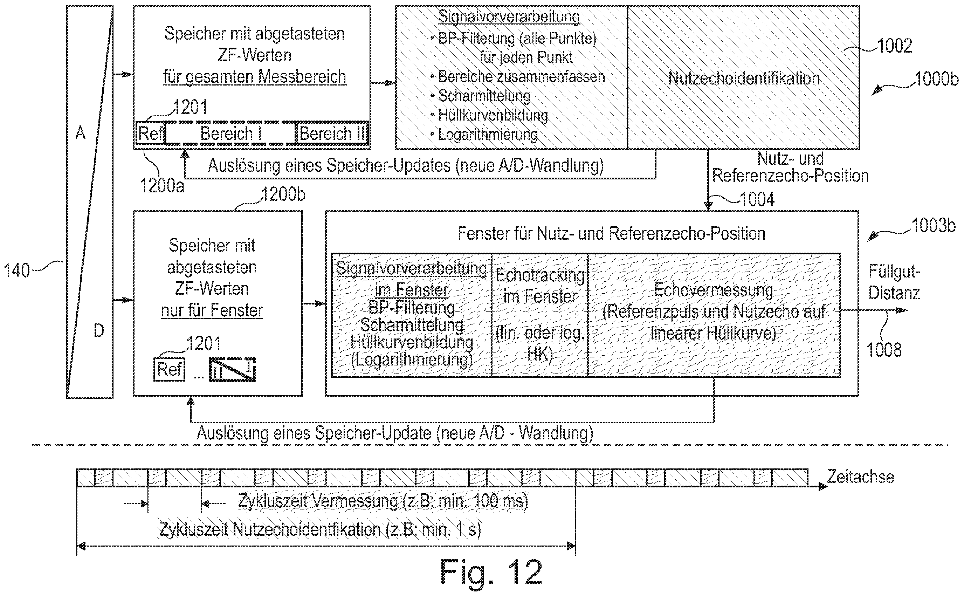

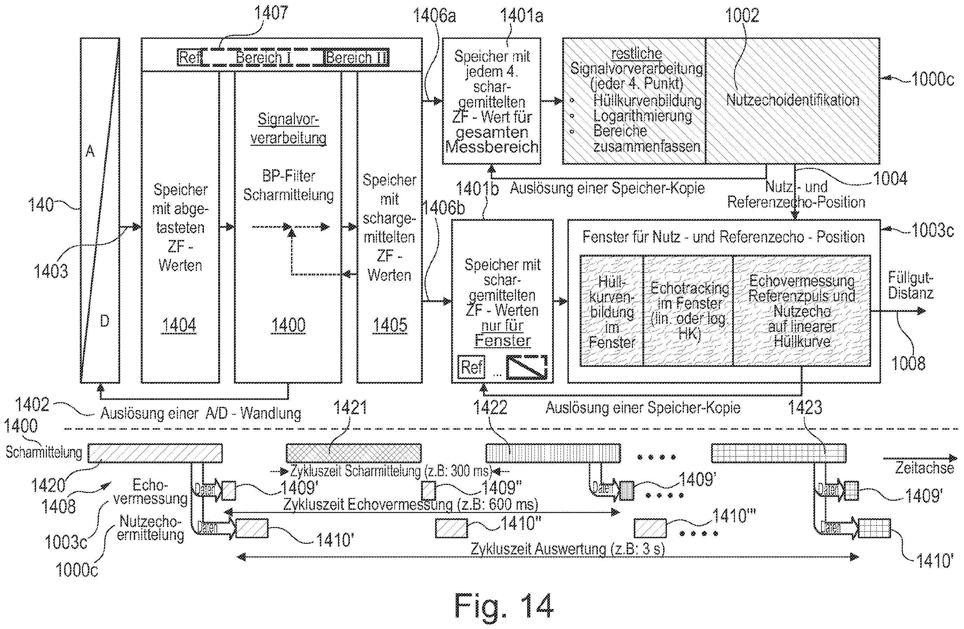

Die Ermittlung der Füllgutdistanz kann mit einer hohen Messrate erfolgen. Die Rate der Echoprofilauswertung oder Nutzechoposition kann mit einer mittleren Rate erfolgen. Durch die Mittelung mit hohem Mittelungsfaktor, d.h. der Mittelwert errechnet sich aus vielen Abtastwerten, lässt sich eine hohe Signalempfindlichkeit für den Fensterbereich erzielen. Der Gewinn an Signalempfindlichkeit über den gesamten Messbereich fällt dagegen geringer aus, weil die zur Auswertetask 1000a gehörige Scharmittelung zeitlich nicht so oft durchgeführt wird und deshalb der Mittelungsfaktor entsprechend niedriger sein muss. Das Verhältnis Messrate zur Leistungsaufnahme ist verglichen mit Variante B und C (Fig. 12 bzw. 14) ausgeglichen. Durch die Kopie der ZF-Werte im Speicher 1100b ist der Bedarf an Speicherplatz erhöht.

Fig. 12 zeigt ein Blockschaltbild für paralleles Auswerten und Vermessen von Echos mit getrennten Speicherbereichen zur parallelen Verarbeitung der Echovermessung gemäß einem exemplarischen Ausführungsbeispiel der vorliegenden Erfindung.

Die in Fig. 12 dargestellte Variante B eines Messsensors weist eine getrennte Speicherung und getrennte Verarbeitung und zwei HF-Modul-Empfindlichkeitsbereiche oder Dynamikbereiche I, II auf. Auch mit Variante B kann durch Abtrennen und paralleles Verarbeiten der Echovermessung die Sensormessrate erhöht werden.

Die Auswerteeinrichtung 1000b ist direkt mit einem Speicher 1200a verbunden. Die Vermesseinrichtung 1003b ist direkt mit einem ihr zugeordneten Speicher 1200b verbunden. Der Auswertespeicher 1200a und der Vermessspeicher 1200b werden parallel je nach Bedarf durch den A/D-Wandler 140 gespeist. Gemäß dem Schema 1201 weist der Speicher 1200a eine Aufteilung in drei Bereiche auf. Ein erster Bereich ist für den Referenzimpuls vorgesehen, ein Bereich I ist gemäß Fig. 8 für einen Dynamikbereich mit eher kleinen Echos und ein Bereich II ist für einen Dynamikbereich mit eher großen Echos vorgesehen. Der Auswertespeicher 1200a weist abgetastete ZF- Werte für den gesamten Messbereich auf. Dabei sind die gespeicherten ZF- Werte gemäß dem in Fig. 9a und 9b dargestellten Schema abgespeichert. Die Auslösung eines Speicherupdates, das heißt eine neue A/D-Wandlung für den gesamten Messbereich wird von der Nutzechoidentifikationstask 1002 angefordert. Danach liegt ein Abbild einer kompletten Echokurve in dem Auswertespeicher 1200a. Das Abbild kann in die Empfindlichkeitsbereiche aufgeteilt sein.

Da sich die Vermesseinrichtung 1003b im Wesentlichen lediglich für den Detailbereich oder Fensterbereich des Nutzechos und/oder des Referenzechos interessiert, erfolgt in dem Auswertespeicher 1200b lediglich eine Speicherung der abgetasteten ZF- Werte für diese beiden Fenster. Alternativ können auch zumindest die ZF-Werte gespeichert werden, die für diese beiden Fenster bestimmt wurden. Diese Speicherung erfolgt ebenfalls nach dem Schema 1201, welches in den Figuren Fig. 9a und Fig. 9b näher erläutert ist. Aber abweichend von diesem Schema 1201 wird im Fensterbereich des Nutzechos 1200b nur einer der beiden Dynamikbereiche abgetastet. Es wird anhand der von der Nutzechoidentifikation 1002 übergebenen Information über das Nutzecho entschieden, welcher der beiden Dynamikbereiche am besten zur Abtastung des Nutzechos passt. Die übergebene Information enthält auch eine Amplitudeninformation.

Die Vermesseinrichtung 1003b kann eine lineare oder logarithmische Hüllkurve bilden und eine Vermessung des Referenzpulses und/oder des Nutzechos auf der linearen oder logarithmierten Hüllkurve durchführen. Hüllkurven können in logarithmischer Form weiterverarbeitet werden, z.B. Hardware-Logarithmierung. Für die Nutzechoidentifikation 1002 kann auch weiterhin eine logarithmische Betrachtung der Hüllkurve genutzt werden. Für die Echovermessung 1003b kann aber auf die Logarithmierung verzichtet werden, um eventuelle Fehler bei der Bildung des logarithmischen Hüllkurvenwerts aus dem linearen Wert zu vermeiden.

Die Vermesseinrichtung 1003b kann ein Speicherupdate oder eine neue A/D-Wandlung für den Vermessspeicher 1200b auslösen. Die Auslösung des Speicherupdates durch die Vermesseinrichtung 1003b kann unabhängig von der Auslösung des Speicherupdates für die Auswerteeinrichtung 1000b erfolgen. Die Auswerteeinrichtung 1000b kann in einem Beispiel den Speicherupdate nach Ablauf einer Zykluszeit der Auswertung auslösen.

Gemäß der Variante B aus Fig. 12 beträgt die Zykluszeit für die Auswertung oder Nutzechoidentifikation beispielsweise mindestens 1 Sekunde und die Zykluszeit für die Vermessung beispielsweise mindestens 100 ms. Verglichen mit Variante A aus Fig. 11 wird in Variante B für die Echovermessung eine noch kürzere Zykluszeit (z.B. 100ms) erreicht, weil hier die Speicherung 1200b der ZF-Abtastwerte für die Echovermessung sich auf die Fensterbereiche beschränkt und nicht auf den gesamten Messbereich, weshalb die Speicherung schneller beendet werden kann. Folglich kann auch für die Nutzechoidentifikation anteilig mehr Bearbeitungszeit zugestanden werden, so dass sich auch hier die Zykluszeit verkürzt (z.B. von 2s auf 1s).

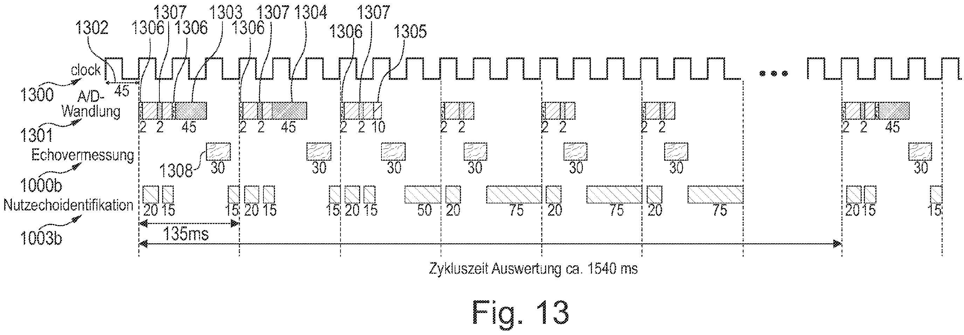

Fig. 13 zeigt ein ausführlicheres Timingdiagramm für getrennte Speicherung und Verarbeitung für eine Messvorrichtung (Variante B), die durch das Blockschaltbild in der Fig. 12 dargestellt ist, gemäß einem exemplarischen Ausführungsbeispiel der vorliegenden Erfindung.

Der Trigger, Takt oder Clock 1300 wird im HF-Teil 110 des Sensors erzeugt und gibt den Takt für die einzelnen Verarbeitungsschritte vor.

In den unter dem Clock 1300 dargestellten Zeilen ist die Aktivität der einzelnen Tasks oder Einrichtungen dargestellt. In der ersten Zeile ist die Task A/D-Wandlung 1301 dargestellt. Darunter ist der Ablauf der Vermesstask 1000b oder Aktivitätszeit der Vermesseinrichtung 1000b dargestellt und darunter ist das Zeitdiagramm für die Auswertetask 1003b bzw. Aktivitätszeit der Auswerteeinrichtung (Nutzechoidentifikation) 1003b dargestellt.

Eine Zykluszeit für einen Auswertezyklus beträgt im dargestellten Beispiel 1540 ms. Dabei wird von der Annahme ausgegangen, dass eine Verarbeitungszeit für die Echovermessung ca. 30 ms beträgt. Die Verarbeitungszeit für die Auswertung kann ca. 1000 ms für einen 80 m Messbereich betragen. Die Verarbeitungszeit 1540ms des Auswertezyklus (Nutzechoidentifikation) setzt sich gemäß Zeile 1003b der Fig. 13 aus Zeitscheiben mit den Dauern 20 ms, 15 ms, 15 ms, 20 ms, 15 ms, 15 ms, 20 ms, 15 ms, 50 ms, 20 ms, 75 ms, 20 ms, 75 ms, 20 ms, 75 ms und weiteren abwechselnden Zeitscheiben mit 20ms und 75ms zusammen, die der besseren Übersichtlichkeit halber nicht weiter dargestellt sind.

Die Zeitdauer oder Verarbeitungszeit für die Echovermessung ist in Zeile 1000b dargestellt und beträgt alle 135 ms 30 ms. Das bedeutet, dass durchschnittlich alle 135ms ein neuer Messwert 1308 zur Verfügung steht.

Innerhalb eines Taktes oder Clocks kann eine Echokurve entsprechend eines Messentfernungsbereichs von 40m in der HF-Schaltung erzeugt werden, d.h. dass nur über einen bestimmten Zeitbereich die Reflexionen verarbeitet werden. Die Messentfernung innerhalb der Clockperiode oder Triggerperiode kann dabei wahlweise von 0m auf 40m oder von 40 auf 80m ansteigen. Ebenso ist der Dynamikbereich zwischen Bereich I und Bereich II auswählbar. Dabei beträgt die Periodendauer ca. 45 ms. So kann abwechselnd der Entfernungsbereich von 0m...40m 1303 und der Entfernungsbereich von 40m...80m 1304, beide mit dem Dynamikbereich I, digitalisiert werden. Ferner kann in ca. 10ms ein Entfernungsbereich von 0...10m 1305 im Dynamikbereich II digitalisiert werden. Somit ist nach dem Digitalisieren der drei Entfernungsbereiche 1303, 1304, 1305 die Echokurve im Entfernungsbereich von 0m bis 80m in Dynamikbereich I und im Entfernungsbereich 0m bis 10m in Dynamikbereich II entsprechend der Darstellung in Fig. 9 einmal digitalisiert. Diese digitalen Werte werden im Speicher 1200a gemäß dem dort angedeuteten Schema 1201 gespeichert.

Während einer ersten Zeitdauer 1306 von 2ms erfolgt die Digitalisierung des Referenzpulses und während der zweiten Zeitdauer 1307 von 2 ms erfolgt die Digitalisierung des Nutzechos in dem jeweiligen Fenster. Die Zeitdauer für das Digitalisieren der Echos in den jeweiligen Fenstern 1306, 1307 ist kürzer als die Zeitdauer für das Digitalisieren 1303, 1304, 1305 der gesamten Echokurve. Die innerhalb der Fenster mit den Zeitdauern 1306 und 1307 digitalisierten Werte werden im Speicher 1200b entsprechend dem Schema 1201 gespeichert.

In anderen Worten findet gemäß der Zeile 1301, die den Zeitablauf für die A/D-Wandlung beschreibt, eine A/D-Wandlung für den Referenzpuls (Dauer 2 ms), das Nutzecho (Dauer 2 ms), den Referenzpuls und den Entfernungsbereich 0 ... 40 m im Dynamikbereich I statt. Danach erfolgt die A/D-Wandlung des Referenzpulses (Dauer 2 ms), des Nutzechos (Dauer 2 ms) und des Entfernungsbereiches 40 - 80 m ebenfalls im Bereich I. Darauf erfolgt eine A/D-Wandlung des Referenzpulses (Dauer 2 ms), des Nutzechos (2 ms) und des Entfernungsbereiches 0 - 10 m im Dynamikbereich II. Darauf schließt sich wiederholt immer der gleiche Ablauf mit der A/D-Wandlung des Referenzpulses und des Nutzechos an.

Die bei der Digitalisierung gewandelten Daten innerhalb der definierten Fensterbreiten, in diesem Beispiel also innerhalb von 2ms entsprechend ca. 2m, werden im Speicher 1200b gespeichert und dienen der Echovermessung.

Die am Beginn des Nutzechoidentifikationszyklus abgetasteten Bereiche von 0m bis 40m 1303, von 40m bis 80m 1304 und noch einmal von 0m bis 10m 1305 werden dagegen im Speicher 1200a gespeichert und dienen als Grundlage zur Kombination zu einer Echokurve von 0m bis 80m mit einer hohen Gesamtdynamik.

Da die Zeitscheiben der drei Zeilen 1301, 1000b, 1003b nie gleichzeitig aktiv sind, zeigt sich, dass sich die drei Prozesse 1301, 1000b, 1003b oder die drei Tasks einen gemeinsamen Prozessor teilen. Für sich betrachtet sind die drei Prozesse jedoch unabhängig voneinander, auch wenn sie regelmäßig in einen Schlafzustand versetzt werden mögen.

Die Variante B weist eine getrennte Abtastung (A/D-Wandlung) für die Vermessung 1306, 1307 und Auswertung 1303, 1304, 1305 auf. Die ZF-Scharmittlung kann innerhalb des begrenzten Fensterbereiches 1306, 1307 schneller als im Gesamtmessbereich 1303, 1304, 1305 durchgeführt werden. Die Echodatenbasis im Auswertespeicher 1200a enthält unabhängige Abtastwerte mit separater Scharmittelung, die gegenüber der Scharmittelung der Werte für die Echovermessung geringer ist.

Die Variante B weist eine hohe Messrate für die Füllgutdistanz auf. Die Nutzechoidentifikation, das heißt die Bestimmung der Nutzechoposition in der Auswerteeinrichtung, kann dennoch mit einer akzeptablen Rate erfolgen. Die Signalempfindlichkeit für den gesamten Messbereich kann durch die Scharmittelung erhöht werden. Die Signalempfindlichkeit für den Fensterbereich ist durch eine noch höhere Scharmittelung sehr hoch. Ferner ist ein gutes Verhältnis von der Messrate zur Leistungsaufnahme gegeben, das heißt die dem Sensor zur Verfügung stehende, unter Umständen sehr geringe Leistung wird hinsichtlich der Messrate optimal genutzt. Bei geringer Sensorspannung, z.B. 12V, und geringem Schleifenstrom, z.B. 4mA, kann eine optimale Nutzung der Leistung zu einer Messrate von mehreren Messungen pro Sekunde führen.

Die zusätzlichen Abtastwerte in dem Speicher 1200b werden nur für den Fensterbereich benötigt, weshalb nur ein geringer zusätzlicher Speicherbedarf durch die Parallelisierung verlangt wird. Mittels Variante B mag sich eine sehr hohe Messrate und hohe Mittelungsfaktoren für die Messwerte erreichen lassen, wodurch sich eine hohe Messgenauigkeit ergeben mag. Damit kann die Variante B für genaue Messungen mit einer hohen Messrate eingesetzt werden.

Fig. 14 zeigt ein Blockschaltbild für paralleles Auswerten und Vermessen von Echos mit vorgelagerter Scharmittelung als eigene Task gemäß einem exemplarischen Ausführungsbeispiel der vorliegenden Erfindung.

Die in Fig. 14 dargestellte Variante C eines Messsensors weist eine vorgelagerte Scharmittelung und zwei HF-Modul-Empfindlichkeitsbereiche auf.

Gemäß Fig. 14 sind nicht nur die Auswerteeinrichtung 1000c und die Vermesseinrichtung 1003c als separate parallele Einrichtungen oder Tasks vorgesehen, sondern auch ein Teil der Signalvorverarbeitung. Beispielsweise ist die Bandpassfilterung und Scharmittelung als eigene Scharmitteleinrichtung 1400 vorgesehen und somit nicht mehr Teil der Auswerteeinrichtung 1000c und der Vermesseinrichtung 1003c. Die Auswerteeinrichtung 1000c weist wiederum die restliche Signalvorverarbeitung auf, welche in jedem 4. Punkt also zu jedem 4. Abtastzeitpunkt erfolgt. Beispielsweise weist die Signalvorverarbeitung die Hüllkurvenbildung, die Logarithmierung und das Zusammenfassen von Bereichen und die eigentliche Auswertefunktion 1002 auf. Wiederum steht die Auswerteeinrichtung 1000c über die Kommunikationsverbindung 1004 mit der Vermesseinrichtung 1003c in Verbindung.

Die Vermesseinrichtung 1003c empfängt wiederum das Fenster, insbesondere die Fensterposition für die Nutzechopositionsbestimmung und für die Referenzechopositionsbestimmung und umfasst die Hüllkurvenbildung innerhalb des Fensters, ein mögliches Echotracking innerhalb des Fensters mit linearer oder logarithmischer Hüllkurve und die Vermessung des Referenzpulses und/oder des Nutzechos auf der linearen Hüllkurve kann ebenfalls in der Vermesseinrichtung 1003c durchgeführt werden. Im Gegensatz zu der logarithmischen Hüllkurve wird in der Vermesseinrichtung 1003c die lineare Hüllkurve eingesetzt, d.h. eine Hüllkurve, welche nicht zusätzlich logarithmiert worden ist.

Wie bei Variante B sind eigene separate Speicher 1401a und 1401b jeweils der Auswerteeinrichtung 1000c und der Vermesseinrichtung 1003c zugeordnet. Außerdem kann die Auswertefunktion (Nutzechoidentifikation) 1002 eine Aufnahme einer Speicherkopie für den Speicher 1401a auslösen. Der Speicher 1401a erhält beispielsweise wieder nur jedes 4. Paar von schargemittelten ZF-Abtastwerten , das heißt bei Betätigen des Auslösens einer Speicherkopie werden bereits gruppenweise bandgefilterte und schargemittelte Abtastwerte der Echokurve für den gesamten Messbereich in den Speicher 1401a eingelesen.

Die Vermesseinrichtung 1003c kann eine Speicherkopie, das heißt eine Aufnahme der bandpassgefilterten und schargemittelten Abtastwerte nur für den Fensterbereich in den Speicher 1401b veranlassen.

Während in dem an der Nutzechoidentifikation 1002 angeschlossenen Speicher 1401a jeder vierte schargemittelte ZF-Wert für den gesamten Messbereich gespeichert wird, wird in dem Speicher 1401b, der an die Echovermessung 1003c angeschlossen ist zwar jeder schargemittelte ZF-Wert gespeichert, allerdings im Wesentlichen nur solange diese Werte in dem Fensterbereich liegen.

Eine Reduktion der gespeicherten Werte kann folglich erreicht werden, indem nicht jeder Wert eines gesamten Messbereichs gespeichert wird, oder in dem nur Werte eines Ausschnitts und/oder Fensters gespeichert werden.

Die Signalvorverarbeitungseinrichtung 1400 führt im Rahmen der Signalvorverarbeitung als unabhängige Task die Bandpassfilterung und/oder Scharmittelung durch. Dazu löst sie über die Auslöseverbindung 1402 eine A/D-Wandlung des A/D-Wandlers 140 aus. Die digitalisierten Analogwerte werden über die Speicheranbindung 1403 in den Speicher mit abgetasteten ZF- Werten 1404 eingelesen. Auf den Speicher 1404, der die abgetasteten ZF- Werte enthält, kann die Signalvorverarbeitungseinrichtung 1400 zugreifen und nach Durchführung der Signalvorverarbeitung, also insbesondere nach der Bandpassfilterung und der Scharmittelung, die schargemittelten ZF- Werte an den Speicher 1405 mit den schargemittelten ZF- Werten bereitstellen. Zur Scharmittelung wird jeweils bezogen auf einen Entfernungsort ein Mittelwert aus aktuell abgetasteten Werten aus dem Speicher 1404 und gespeicherten Werten aus dem Speicher 1405 unter Beachtung einer bestimmten gegenseitigen Gewichtung gebildet.

Alternativ zur Bereitstellung von ZF-Werten ist es auch denkbar, dass innerhalb der Signalvorverarbeitung 1400 gleich auch eine Hüllkurvenbildung stattfindet und in den Speichern 1405, 1401a und 1401b statt schargemittelter ZF-Werte schargemittelte Hüllkurvenwerte vorliegen.

Über die Speicheranbindung 1406a kann der Speicher 1401a für die Auswerteeinrichtung 1000c die schargemittelten Werte für den gesamten Messbereich aus dem Speicher mit schargemittelten Werten 1405 auslesen und über die Speicheranbindung 1406b kann der der Vermesseinrichtung 1003c zugeordnete Speicher 1401b die schargemittelten Werte nur für den Fensterbereich auslesen.

Die Signalvorverarbeitung 1400 kann wiederum in unterschiedlichen Empfindlichkeitsbereichen 1407 und/oder in unterschiedlichen Entfernungsbereichen 1407 stattfinden. Die Signalvorverarbeitung 1400 arbeitet unabhängig vom gewählten Empfindlichkeitsbereich.

In der Fig. 14 ist ebenfalls ein Zeitdiagramm 1408 dargestellt, welches den Zeitverlauf für die drei unabhängigen Tasks beschreibt, die gemäß dem in Fig. 14 dargestellten Blockdiagramm vorgesehen sind. Dabei sind vier verschiedene Zyklen der Scharmittelungen zur Unterscheidung in vier verschiedenen Mustern dargestellt, wobei eine Scharmittelungszykluszeit beispielsweise 300 ms beträgt.

Nach der ersten dargestellten Scharmittelung 1420 werden schargemittelte Werte 1409' von dem Speicher 1405 mit schargemittelten Werten über die Speicheranbindung 1406b an die Vermesseinrichtung 1003c und die zugehörige Vermesstask 1003c bereitgestellt.

Außerdem werden schargemittelte Werte 1410' aus dem Speicher mit schargemittelten Werten 1405 über die Speicheranbindung 1406a an die Auswerteeinrichtung 1000c bereitgestellt. Das Bereitstellen von Werten 1409', 1410' und/oder Daten 1409', 1410' ist in Fig. 14 durch gebogene Pfeile dargestellt. Nach dem Bereitstellen der schargemittelten Werte an die Auswerteeinrichtung 1000c, kann basierend auf diesen Daten 1409'die in der zweiten Zeile dargestellte Echovermessung erfolgen, gefolgt von der in der dritten Zeile dargestellten Nutzechoermittlung. Beide Tasks - Echovermessung und Nutzechoermittlung - werden im dargestellten Beispiel in der ersten Zeitscheibe 1409', 1410' nicht vollständig abgearbeitet, sondern zu Gunsten der zweiten dargestellten Scharmittelung 1421 unterbrochen.

Da weder Echovermessung 1003c noch Nutzechoidentifikation 1000c abgeschlossen sind, werden diese nach der zweiten dargestellten Scharmittelung 1421 neu vorliegenden Daten im Speicher 1405 nicht abgerufen, sondern dienen nur der neuerlichen Scharmittelung 1400. In der zweiten Zeitscheibe der Echovermessung wird dann die Vermessung der Daten 1409"aus der ersten Scharmittelung 1420, 1409'abgeschlossen. Das bedeutet, dass die Echovermessung 1003c nach der dritten dargestellten Scharmittelung 1422 neue Echodaten 1409' für eine neue Echovermessung aus dem Speicher 1405 abruft.

Die Nutzechoidentifikation 1000c dagegen wird auch weiterhin die aus der ersten Scharmittelung 1420 abgerufenen Daten 1410''' auswerten, bis auch diese Auswertung abgeschlossen ist und aus der letzten dargestellten Scharmittelung 1423 wieder neue Daten 1409', 1410' für Echovermessung 1003c und Nutzechoidentifikation 1000c bereitgestellt werden.

Die Zykluszeit für die Vermessung beträgt auf die oben dargestellte Weise beispielsweise 600 ms. In dem Beispiel des Zeitdiagramms 1408 ist wie ausgeführt eine aufgeteilte Vermesstask 1409, 1003c dargestellt, das heißt ein Messwert liegt erst nach zwei Zeitscheiben 1409', 1409" bereit. In einem anderen exemplarischen Ausführungsbeispiel könnte der Messwert auch innerhalb einer einzigen Zeitscheibe oder innerhalb von mehr als zwei Zeitscheiben vorliegen. Die Zykluszeit kann von mehreren Größen beeinflusst werden. Beispielsweise hat der Messbereich oder die Rechenleistung einen Einfluss darauf, wie oft die einzelnen Tasks unterbrochen werden. In einem anderen Beispiel, in dem jede Task einen fest zugeteilten eigenen Prozessor hat, mag im Wesentlichen keine Unterbrechung vorkommen.

In dem Beispiel der Fig. 14 findet während der zweiten Scharmittelung 1421 keine Übertragung der Daten an die Auswerteeinrichtung 1000c und Vermesseinrichtung 1003c statt, da beide Einrichtungen noch mit dem Verarbeiten der vorhandenen Daten 1409' und 1410' beschäftigt sind. Die Zykluszeit für die Vermessung 1003c beträgt beispielsweise 600 ms und die Zykluszeit für eine Auswertung (Nutzechoidentifikation) 1000c beträgt beispielsweise 3 s, das heißt die Zeitdauer für das Nachstellen der Fensterposition ist mit 3s wesentlich höher als die Zeitdauer für das Vermessen der Echos mit 600 ms.

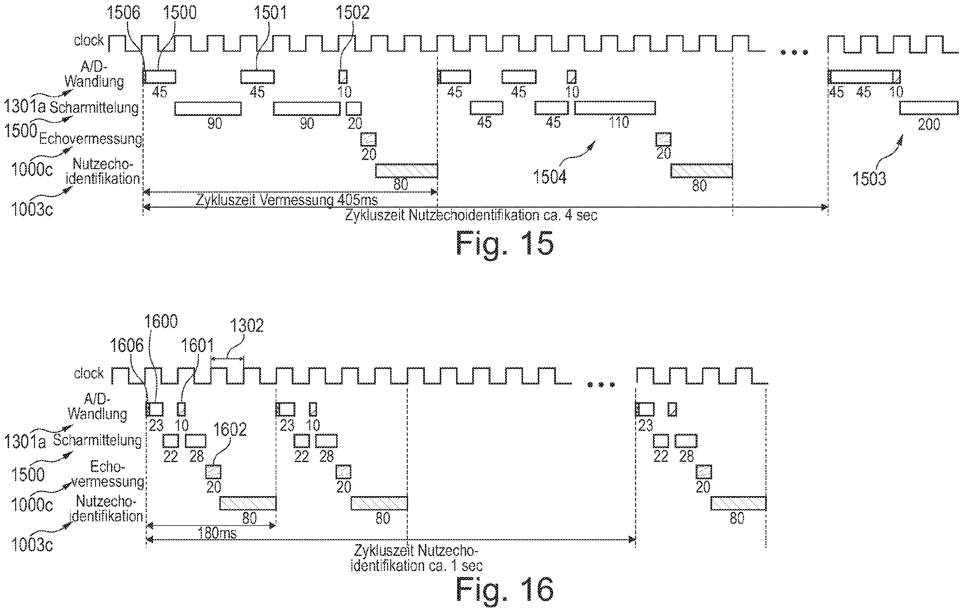

Fig. 15 zeigt ein weiteres Timingdiagramm für die in Fig. 14 dargestellte Variante C des Messsensors gemäß einem exemplarischen Ausführungsbeispiels der vorliegenden Erfindung.

Durch die vorgelagerte Scharmittelung 1400 existieren nun vier unterschiedliche unabhängige parallele Tasks, die A/D-Wandlung 1301a, die Scharmittelung 1500, die Vermessungstask 1000c und die Auswertetask 1003c. Die Zykluszeit für die Auswertung (Nutzechoidentifikation) 1003c beträgt in diesem exemplarischen Ausführungsbeispiel ca. 4 Sekunden. Die Verarbeitungszeit für die Scharmittelung wurde für den Messbereich von 80 m, der in Fig. 15 angenommen ist, mit ca. 200 ms angenommen. Die Verarbeitungszeit für die Vermessung beträgt beispielsweise ca. 20 ms und die Verarbeitungszeit für die Nutzechoidentifikation 1003c beträgt beispielsweise ca. 800ms für 80 m Messbereich des Sensors.

Bei der A/D-Wandlung 1301a erfolgt ähnlich wie in Fig. 13 zunächst eine A/D-Wandlung des Referenzpulses 1506, dann erfolgt eine A/D-Wandlung des Entfernungsbereiches 0 - 40 m 1500 im Dynamikbereich I (Dauer: 45ms), dann erfolgt eine A/D-Wandlung des Entfernungsbereiches 40 - 80 m 1501 (Bereich I, Dauer: 45ms), worauf sich eine A/D-Wandlung des Entfernungsbereichs 0 - 10 m 1502 im Dynamikbereich II (Dauer: 10 ms) anschließt. Die Kombination dieser Entfernungs- und Empfindlichkeitsbereiche bildet wie schon beschrieben die Datenbasis für die Nutzechoidentifikation 1003c. Die Echovermessung 1500 bedient sich aus dieser Datenbasis mit Daten innerhalb der beschriebenen Fenster, wobei der Empfindlichkeitsbereich anhand der jeweiligen Echoamplitude auszuwählen ist.

Nach der A/D-Wandlung eines bestimmten Bereichs 1500, 1501, 1502 kann unmittelbar eine Scharmittelung dieses einzelnen Bereichs 1500, 1501, 1502 erfolgen. So können sich beispielsweise Intervalle zu 90ms, 20 ms, 45 ms, 110ms und 200 ms für die Scharmittelung ergeben.

Ebenso ist es aber auch denkbar, erst alle Bereiche 1500, 1501, 1502 zu wandeln (A/D-Wandlung) und danach in einem Block der Länge 200ms den gesamten Bereich 1500, 1501, 1502 scharzumitteln. Diese Scharmittelung des gesamten Bereichs 1500, 1501, 1502 ist im Bereich 1503 des Zeitdiagramms der Fig. 15 dargestellt.

Der Bereich 1504 zeigt eine weitere alternative Einteilung der A/D-Wandlung.

In dem exemplarischen Ausführungsbeispiel der Fig. 15 erhält die Echovermessungstask 1000c eine Zeitscheibe von 20ms, in der ein kompletter Vermessungszyklus durchführbar ist. Die Nutzechoidentifikationstask 1003c benötigt dagegen 10 der dargestellten Zeitscheiben von jeweils 80ms, um zu einem Ergebnis zu gelangen. Damit ergibt sich eine Zykluszeit der Echovermessung von 410ms und eine Zykluszeit der Nutzechoidentifikation von ca. 4 Sekunden.

Fig. 16 zeigt ein weiteres Timingdiagramm für vorgelagerte getrennte Scharmittelung und Verarbeitung für eine Messvorrichtung der Fig. 14 gemäß einem exemplarischen Ausführungsbeispiel der vorliegenden Erfindung.

Fig. 16 zeigt ein weiteres Timingdiagramm für Variante C mit vorgelagerter Scharmittelung jedoch für einen Messbereich von 20 m. Der Messbereich wird auf die Höhe des Füllgutbehälters angepasst. Es wäre eine Verschwendung von Rechenzeit und/oder Auswertezeit, einen Behälter, der beispielsweise weniger als 10m hoch ist innerhalb eines Messbereichs von 80m zu untersuchen. Daher können Messsensoren für die unterschiedlichen Messbereiche einstellbar oder angepasst sein. In vielen Anwendungsfällen können Behälterhöhen vorliegen die kleiner als 10m sind. Sensoren mit einem Messbereich von 80m werden in sehr hohen Behältern eingesetzt.

In dem Beispiel nach Fig. 16 wird davon ausgegangen, dass die Verarbeitungszeit für die Scharmittelung ca. 50 ms für den 20 m Messbereich beträgt. Die Verarbeitungszeit für die Vermessung beträgt wie im Falle eines Messbereichs von 80m ca. 20 ms und die Verarbeitungszeit für die Auswertung beträgt ca. 400 ms für den 20 m Messbereich. Es sind ebenfalls die Zeitscheibeneinteilungen der verschiedenen Tasks A/D-Wandlung 1301a, Scharmittlung 1500, Vermessung 1000c und Auswertung 1003c in Fig. 16 dargestellt.

Innerhalb des ersten Zyklus von 180 ms wird das Echoprofil oder die Echokurve für den Referenzpuls 1606, den Entfernungsbereich 0 ... 20 m 1600 (Dauer 23ms) im Dynamikbereich I und den Entfernungsbereich 0 ... 10 m 1601 (Dauer 10ms) im Dynamikbereich II mittels der A/D Wandler digitalisiert. Die großen Echos werden also wieder im Bereich 0m... 10m erwartet.

Ferner wird dargestellt, dass die Scharmittelung die durch die A/D-Wandlung vorliegenden Werte zu geeigneten Zeiten scharmittelt, z.B. jeweils innerhalb der verbleibenden Zeit einer Triggerperiode 1302.

Nach dem Durchführen der Scharmittlung stehen die Werte 1602 für die Vermessung zur Verfügung. Für die Echovermessung 1000c ergibt sich aus diesem Beispiel eine Zykluszeit von nur 180ms. Die Zykluszeit für die Auswertung (Nutzechoidentifikation) 1003c beträgt ca. 1 Sekunde.

Bei der Variante C des Messsensors ist die Abtastung (A/D Wandlung) ein eigenständiger Softwareblock und/oder eine eigenständige Hardwareeinrichtung. Außerdem ist die Bandpass-Filterung und die Scharmittelung ein eigener Softwareblock (Task) oder eine eigene Einrichtung.

Für die ZF-Scharmittelung ist nur eine Scharmittelung als gemeinsame Datenbasis für Nutzechidentifikation 1003c und Echovermessung 1000c vorgesehen. Folglich greifen die Auswerteeinrichtung 1003c und die Vermesseinrichtung 1000c auf eine gemeinsame Datenbasis 1405 von schargemittelten Werten zu.

Durch die Aufteilung in 3 parallele Blöcke ist bei der Variante C nur eine mittlere bis geringe Messrate für die Füllgutdistanz erzielbar verglichen mit den Varianten A oder B. Ebenso ist die Rate der Echoprofilauswertung gering. Allerdings lässt sich durch die häufige Scharmittelung eine sehr hohe Signalempfindlichkeit im gesamten Messbereich und im Fenster erreichen.

Durch das Kopieren der Abtastwerte in die weiteren Speicherblöcke 1401a und 1401b ergibt sich ein zusätzlicher Speicherbedarf von einem Viertel der Abtastwerte, welche im gesamten Messbereich anfallen, für den Speicher 1401a und von den zusätzlichen Werten, welche innerhalb des Fensters anfallen, für den Speicher 1401b. Die zusätzlichen Werte beziehen sich auf eine nicht parallele sondern serielle Abarbeitung der Tasks.

Die Variante C mag Messungen mit einer hohen Signalempfindlichkeit ermöglichen.

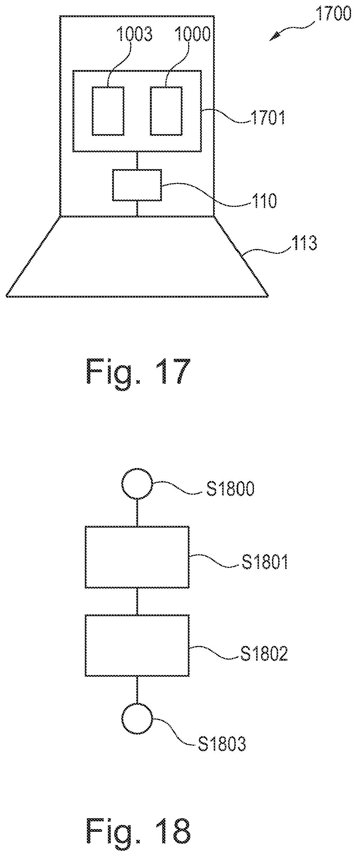

Fig. 17 zeigt ein Blockschaltbild eines Messsensors gemäß einem exemplarischen Ausführungsbeispiel der vorliegenden Erfindung.

Der Messsensor weist eine Echokurvengeneriereinrichtung 110 auf, die Echogeneriereinrichtung ist mit der Antenne 113 verbunden und erlaubt es, ein Sendesignal in Richtung einer Füllgutoberfläche zu schicken, welche in Fig. 17 nicht dargestellt ist. Ferner weist die Messvorrichtung 1700 die Analyseeinrichtung 1701 mit der Auswerteeinrichtung 1000 und der Vermesseinrichtung 1003 auf, wobei die Analyseeinrichtung mit der Echokurvengeneriereinrichtung 110 verbunden ist.

Die Analyseeinrichtung 1701 empfängt von der Echogeneriereinrichtung eine Echokurve für die weitere Untersuchung mittels der Vermesseinrichtung 1003 und der Auswerteeinrichtung 1000. Die Vermesseinrichtung mag einen Abstand eines Nutzechos zu einem Referenzecho bestimmen. Die Auswerteeinrichtung 1000 oder Nutzechoidentifiziereinrichtung mag die Position eines Echos bestimmen können. Die Messvorrichtung 1700 mag zum Analysieren der Echokurve zwischen dem Analysieren mittels zumindest zweier unabhängiger Tasks und/oder dem Analysieren der Echokurve durch vergleichen der Echokurve mit einer Störechokurve auf ZF-Ebene umschaltbar sein. Dazu kann die Messvorrichtung zumindest zwei Betriebsmodi anbieten. In dem ersten Betriebsmodus mag die Echokurve mittels zumindest zweier unabhängiger Tasks analysiert werden. In dem zweiten Betriebsmodus mag die Echokurve durch vergleichen der Echokurve mit einer Störechokurve auf ZF-Ebene analysiert werden. Zwischen beiden Modi kann umgeschaltet werden. Beide Modi können jedoch auch gleichzeitig aktiv sein.

Fig. 18 zeigt ein Flussdiagramm für ein Verfahren zur Füllstandsmessung gemäß einem exemplarischen Ausführungsbeispiel der vorliegenden Erfindung.

Das Verfahren startet in einem Idle-Zustand S1800. In einem Schritt S1801 erfolgt ein Generieren einer Echokurve.

In einem Schritt S1802 erfolgt sodann ein Analysieren der Echokurve, wobei das Analysieren mittels zumindest zweier unabhängiger Tasks durchgeführt werden kann und/oder wobei zum Analysieren ein Vergleich mit einer Störechokurve auf ZF-Ebene durchgeführt werden kann. Im Schritt S1803 befindet sich das System wieder in dem Idle-Zustand.

## Patentansprüche

1. Verfahren zur Füllstandmessung mittels Laufzeitverfahren zur Ausführung durch einen Prozessor einer Messvorrichtung (1700), aufweisend:
zyklisches Generieren einer Echokurve;
Analysieren der Echokurve mittels mehrerer Tasks;
wobei eine der Tasks eine Auswertetask (1000) ist;
wobei mehrere der Tasks Vermessungstasks (1003) sind;
wobei die Auswertetask (1000) das grobe Bestimmen einer Echoposition aufweist und durch die Vermessungstasks unterbrochen wird;
wobei die Vermessungstasks (1003) das genaue Bestimmen der Echoposition aus der grob bestimmten Echoposition aufweisen;
wobei eine Aufteilung einer Prozessrechenzeit des Prozessors der Messvorrichtung gemäß einem Prozessorzuteilplan als verschachtelte Verarbeitung der Auswertetask und der Vermessungstasks in Zeitscheiben erfolgt.

2. Verfahren nach Anspruch 1, wobei ein Abschnitt der Echokurve analysiert wird.

3. Verfahren nach einem der Ansprüche 1 oder 2, ferner aufweisend:
Speichern der Echokurve und/oder einer Störechokurve durch paarweises Abtasten der Echokurve und/oder durch paarweises versetztes Abtasten der Echokurve.

4. Verfahren nach einem der Ansprüche 1 bis 3, wobei die mehreren Tasks zu jeweils einem Triggerzeitpunkt gestartet werden;
wobei die Triggerzeitpunkte der Tasks ein Tastverhältnis ungleich 50% aufweisen.

5. Verfahren nach Anspruch 4, wobei die Triggerzeitpunkte eine Zuteilung von den mehreren Tasks zu einer gemeinsamen Ausführungseinrichtung bestimmen.

6. Verfahren, nach einem der Ansprüche 2 bis 5, wobei eine erste Task der mehreren Tasks zum Auswählen des Abschnitts der Echokurve eingerichtet ist; und
wobei eine zweite Task der mehreren Tasks zum Analysieren des ausgewählten Abschnitts der Echokurve eingerichtet ist.

7. Verfahren nach einem der Ansprüche 2 bis 6, ferner aufweisend:
Bilden eines Fensterbereichs zum Auswählen des Abschnitts der Echokurve;
Analysieren der Echokurve innerhalb des Fensterbereichs.

8. Verfahren, nach Anspruch 6 oder 7, wobei das Analysieren des ausgewählten Abschnitts das Anwenden zumindest eines Echoanalyseverfahrens ausgewählt aus der Gruppe der Echoanalyseverfahren bestehend aus
Flankenvermessung;
Interpolieren;
Bestimmen des Amplitudenanstiegs am Beginn;
Maximal-Amplitude des Echos;
Vermessen an der Flanke;
Vergleichen mit einem Mustersignal; und
Korrelieren
aufweist.

9. Programm-Element, welches einen Software-Code aufweist, welcher, wenn er von einem Prozessor ausgeführt wird, das Verfahren nach Anspruch 1 ausführt.

10. Messvorrichtung (1700) zur Füllstandmessung mittels Laufzeitverfahren, aufweisend:
einen Prozessor,
eine Echokurvengeneriereinrichtung (110);
eine Analyseeinrichtung (1003, 1000);
wobei die Echokurvengeneriereinrichtung (110) zum zyklischen Generieren einer Echokurve eingerichtet ist;
wobei die Analyseeinrichtung (1003, 1000) zum Analysieren der Echokurve mittels mehrerer Tasks eingerichtet ist;
wobei eine der Tasks eine Auswertetask ist;
wobei mehrere der Tasks Vermessungstasks sind;
wobei die Auswertetask das grobe Bestimmen einer Echoposition aufweist und durch die Vermessungstasks unterbrochen wird;
wobei die Vermessungstasks das genaue Bestimmen der Echoposition aus der grob bestimmten Echoposition aufweisen;
**dadurch gekennzeichnet, dass** der Prozessor so ausgestaltet ist, dass
eine Aufteilung einer Prozessrechenzeit des Prozessors gemäß einem Prozessorzuteilplan als verschachtelte Verarbeitung der Auswertetask und der Vermessungstasks in Zeitscheiben erfolgt.

11. Verwendung der Messvorrichtung (1700) nach Anspruch 10 zur Kollisions-Überwachung.

## Claims

1. A method for measuring a fill level by means of a transit-time method for the execution of a measuring device (1700) by a processor, comprising:
cyclically generating an echo curve;
analysing the echo curve by means of a plurality of tasks;
wherein one of the tasks is an evaluation task (1000);
wherein several of the tasks are measuring tasks (1003);
wherein the evaluation task (1000) comprises rough determination of an echo position and is interrupted by the measuring tasks;
wherein the measuring tasks (1003) comprise precise determination of the echo position from the roughly determined echo position;
wherein a division of a process computing time of the processor of the measuring device according to a processor allocation plan takes place as nested processing of the evaluation task and the measuring tasks in time slices.

2. The method according to claim 1, wherein a section of the echo curve is analysed.

3. The method according to claim 1 or 2, further comprising:
storing the echo curve and/or a spurious-echo curve by sampling the echo curve in pairs and/or by offset sampling the echo curve in pairs.

4. The method according to any one of claims 1 to 3, wherein the plurality of tasks are in each case started at a time point of triggering;
wherein the time points of triggering of the tasks comprise a sampling ratio other than 50%.

5. The method according to claim 4, wherein the time points of triggering determine the allocation of the plurality of tasks to a shared executing device.

6. The method of any one of claims 2 to 5, wherein a first task of the plurality of tasks is equipped for selecting a section of the echo curve; and
wherein a second task of the plurality of tasks is equipped for analysing the selected section of the echo curve.

7. The method according to any one of claims 2 to 6, further comprising:
forming a window region for selecting the section of the echo curve;
analysing the echo curve within the window region.

8. The method according to claim 6 or 7, wherein analysis of the selected section comprises the application of at least one echo analysis method selected from the group of echo analysis methods consisting of:
slope measuring;
interpolating;
determining the amplitude increase at a beginning;
determining a maximum amplitude of the echo;
measuring at the slope;
comparing with a reference signal; and
correlating.

9. A program element comprising a software code which, when executed by a processor, carries out the method according to claim 1.

10. A measuring device (1700) for measuring a fill level by means of a transit-time method, comprising:
a processor;
an echo-curve generating device (110);
an analysis device (1003, 1000);
wherein the echo-curve generating device (110) is equipped for cyclically generating an echo curve;
wherein the analysis device (1003, 1000) is equipped for analysing the echo curve by means of a plurality of tasks;
wherein one of the tasks is an evaluation task;
wherein several of the tasks are measuring tasks;
wherein the evaluation task comprises rough determination of an echo position and is interrupted by the measuring tasks;
wherein the measuring tasks comprise precise determination of the echo position from the roughly determined echo position;
**characterized in that** the processor is configured in such a way that
a division of a process computing time of the processor according to a processor allocation plan takes place as nested processing of the evaluation task and the measuring tasks in time slices.

11. The use of the measuring device (1700) according to claim 10 for monitoring collision.

## Revendications

1. Procédé pour mesurer un niveau de remplissage en utilisant le principe du temps de propagation à exécuter par un processeur d'un dispositif de mesure (1700), comportant les étapes consistant à :
générer cycliquement une courbe d'écho,
analyser la courbe d'écho au moyen de plusieurs tâches,
dans lequel l'une des tâches est une tâche d'analyse (1000),
dans lequel plusieurs des tâches sont des tâches de mesure (1003),
dans lequel la tâche d'analyse (1000) comporte la détermination grossière d'une position d'écho et est interrompue par les tâches de mesure,
dans lequel les tâches de mesure (1003) comportent la détermination précise de la position d'écho à partir de la position d'écho déterminée grossièrement,
dans lequel un temps de calcul de processus du processeur du dispositif de mesure est partagé en tranches de temps selon un plan d'allocation de processeur comme un traitement imbriqué de la tâche d'analyse et des tâches de mesure.

2. Procédé selon la revendication 1, dans lequel une partie de la courbe d'écho est analysée.

3. Procédé selon l'une des revendications 1 ou 2, comportant en outre l'étape consistant à :
enregistrer la courbe d'écho et/ou une courbe d'écho parasite en échantillonnant la courbe d'écho par paire et/ou en échantillonnant la courbe d'écho par paire de manière décalée.

4. Procédé selon l'une des revendications 1 à 3, dans lequel la pluralité de tâches est lancée respectivement à un instant de déclenchement,
dans lequel les instants de déclenchement des tâches ont un taux d'échantillonnage différent de 50 %.

5. Procédé selon la revendication 4, dans lequel les instants de déclenchement déterminent une allocation de la pluralité de tâches à un dispositif d'exécution partagé.

6. Procédé selon l'une des revendications 2 à 5, dans lequel une première tâche de la pluralité de tâches est configurée pour choisir la partie de la courbe d'écho, et
dans lequel une seconde tâche de la pluralité de tâches est conçue pour analyser la partie choisie de la courbe d'écho.

7. Procédé selon l'une des revendications 2 à 6, comportant en outre les étapes consistant à :
former une zone de fenêtre pour choisir la partie de la courbe d'écho,
analyser la courbe d'écho à l'intérieur de la zone de fenêtre.

8. Procédé selon la revendication 6 ou 7, dans lequel l'analyse de la partie choisie comporte l'utilisation d'au moins un procédé d'analyse d'écho choisi parmi le groupe des procédés d'analyse d'écho constitué :
d'une mesure de flanc,
d'une interpolation,
d'une détermination de l'augmentation d'amplitude au début,
d'une détermination de l'amplitude maximale de l'écho,
d'une mesure au niveau du flanc,
d'une comparaison avec un signal de référence, et
d'une corrélation.

9. Elément de programme comportant un code logiciel qui, lorsqu'il est exécuté par un processeur, met en oeuvre le procédé selon la revendication 1.

10. Dispositif de mesure (1700) pour mesurer un niveau de remplissage au moyen d'un procédé de temps de propagation, comportant :
un processeur,
un dispositif de génération de courbes d'échos (110),
un dispositif d'analyse (1003, 1000),
dans lequel le dispositif de génération de s d'échos (110) est configuré pour générer cycliquement une courbe d'écho,
dans lequel le dispositif d'analyse (1003, 1000) est conçu pour analyser la courbe d'écho au moyen de plusieurs tâches,
dans lequel l'une des tâches est une tâche d'analyse,
dans lequel plusieurs des tâches sont des tâches de mesure,
dans lequel la tâche d'analyse comporte la détermination grossière de la position d'écho et est interrompue par la tâche de mesure,
dans lequel les tâches de mesure comportent la détermination précise d'une position d'écho à partir de la position d'écho déterminée grossièrement,
**caractérisé en ce que** le processeur est configuré de sorte qu'un temps de calcul de processus du processeur du dispositif de mesure est partagé en tranches de temps selon un plan d'allocation de processeur comme un traitement imbriqué de la tâche d'analyse et des tâches de mesure.

11. Utilisation du dispositif de mesure (1700) selon la revendication 10 pour surveiller des collisions.
